# EUROPEAN PATENT APPLICATION

(11) **EP 4 223 119 A1**
(43) Date of publication of application: **09.08.2023**
(21) Application number: 23154156.6
(22) Date of filing: 31.01.2023
(51) Int. Cl.: A01M 7/00

(54) **SMART SPRAYER FOR PRECISION AGRICULTURE**

(30) Priority: 03.02.2022 US 202263306460 P
(71) Applicant: Stout Industrial Technology, Inc., Salinas, CA 93908 (US)
(72) Inventor: Antle, Jeffrey L., Salinas, 93908 (US); Snyder, Steven T., Salinas, 93908 (US)
(74) Representative: Gill Jennings & Every LLP

(57) **Abstract**

An illustrative smart sprayer for a precision agricultural implement includes a mount for coupling the sprayer to a modular tool arm of the implement, and a spray head, an airflow generator, a solenoid valve, and an inspirator mixer located within a containment shroud. The smart sprayer is one of alternative agricultural tools that can be selectively coupled to and be operated by a control system of the common platform precision agricultural implement, including a machine vision module for identifying and locating commodity plants, non-commodity plants, and positioning the agricultural tools laterally and vertically relative to commodity plant lines.

## Description

### BACKGROUND

The present invention relates to automated machinery, and particularly, to a machine vision enabled precision sprayer for a modular agricultural implement.

Beneficial commodity plant treatment materials include, but are not limited to, fertilizers and pathogen management materials, for example, insecticides and fungicides. Treatment materials used for thinning commodity plants include, but are not limited to, fertilizers, acids, and herbicides. Such treatment materials may be produced in dry and/or fluid form; however, most are applied to commodity fields in fluid form that may be, for example, broadcast sprayed, sprayed only on commodity plants, or sprayed only on non-commodity plants or around commodity plants.

The efficacy of treatment materials against pathogens in many cases continues to weaken over time due to heightened resistance against common treatment materials. Previously, spraying treatment material onto any portion of a commodity plant structure would generally transfer the treatment material to the pathogen itself and achieve a beneficial result. More recently however, treatment materials often must be applied directly to the pathogen to ensure a beneficial result, requiring much more treatment material volume and thus cost. Pathogens are often located in cervices between plant structures, for example, between leaves and near the base of leaf petioles at the stem node junction. For treatment materials to reach such pathogens, the application process typically required soaking the commodity plant with material treatment in order to successfully penetrate the plant structure and reach the pathogen, further increasing cost and excessive treatment material run-off from the plants.

Some treatment materials that may be available are too costly to apply using broadcast, non-precision spraying given the economic factors associated with growing particular commodity plants and/or environmental and human consumption factors associated with higher volumes of treatment materials.

Residual dribble of treatment material because of a dead zone in the delivery system causes wasted material and material being applied to unintended areas of the commodity bed, for example, drizzling thinning treatment material on commodity plants traversed after the spray cycle had been terminated.

Prior art sprayer systems used for precision agriculture are expensive systems that are specific to treatment material spray application and are not adapted to be used with other agricultural tools and lifecycle processes, elevating capital costs and production costs for commodity crops.

At least one prior art spray treatment delivery system uses a large plenum with multiple nozzles and large pressure fan within plenum to create a treatment material fog area within the plenum area and over the commodity plant bed, and may include inefficient overlapping spray patterns of adjacent spray nozzles. While minimizing drift outside the boundaries of the plant bed, this prior art system uses high volumes of treatment materials sufficient to cover the entire commodity plant bed and is unable to apply treatment materials to only selected commodity plants, or to only non-commodity plants, or to only areas around selected commodity plants. Such application systems waste expensive treatment material and delivery treatment material to unnecessary areas, risking detrimental environmental impacts.

Another prior art spray treatment delivery system uses a spray plenum for each plant row, but lacks efficient spray flow characteristics and thus extends the treatment material applied well beyond the boundaries of the individual commodity plants. The prior art system also lacks efficient spray flow characteristics to effectively penetrate the commodity plant structure for effective coverage of pathogens with treatment material that provides a beneficial outsome.

### SUMMARY

The present invention may comprise one or more of the features recited in the attached claims, and/or one or more of the following features and combinations thereof.

An illustrative smart sprayer for a precision agricultural implement includes a mount for coupling the sprayer to a modular tool arm of the implement, and includes a spray head, airflow generator, treatment material valve, and an inspirator mixer all located within a containment shroud. The smart sprayer is one of various alternative agricultural tools that can be selectively coupled to and be operated by a control system of the common platform precision agricultural implement, including a machine vision module for identifying and locating commodity plants, non-commodity plants, and positioning the agricultural tools laterally and vertically relative to commodity plant lines.

One illustrative embodiment of a smart sprayer for use with a precision agriculture implement to apply a treatment material to selective application sites, comprises: a shroud; a single spray head located within the shroud and positioned to direct the treatment material toward one of the selective application sites as it is traversed by the smart sprayer; an airflow generator positioned to direct an airflow around the single spray head and toward the one of the selective application sites. The smart sprayer can further comprise a mixer located coaxially around the single spray head, the mixer for mixing the airflow and the treatment material. The mixer can be a Venturi type inspirator. The single spray head can include a discharge tip; and the discharge tip can be located within a diverging cone of the mixer and adjacent to a throat of the mixer.

The smart sprayer can further comprise a first valve for selectively supplying the treatment material to the single spray head. The first valve can be located within the shroud and adjacent an inlet of the single spray head. The first valve can be a solenoid valve. The smart sprayer can further comprise a second valve for regulating the pressure of the treatment material discharged by the single spray head. The smart sprayer can further comprise a flowmeter for measuring the treatment material discharged by the single spray head or by multiple spray heads.

The airflow generator can comprise a fan located within the shroud. The airflow volume flowing over the single spray head can provide atomization of the treatment material discharged by the single spray head and/or can clears a discharge tip of the single spray head of residue treatment material after a discharge cycle of treatment material is complete. The smart sprayer can further comprise: an airflow generator controller for selectively setting an airflow volume produced by the airflow generator; and the airflow volume produced by the airflow generator can be at least 300 cubic feet per minute.

An airflow channel can be formed between an outer surface of the mixer and the shroud; and an air curtain can be formed by a portion of the airflow flowing through the airflow channel and around a mixture of the airflow and the treatment material exiting the mixer. The shroud can be cylindrical. The shroud can have a diameter between 3 inches and 9 inches and a length between 6 inches and 18 inches. The shroud can have a diameter of about 6 inches. The discharge tip of the single spray head can be located less than 4 inches above a bottom edge of the shroud. A discharge tip of the single spray head can be located within 2 inches of a bottom edge of the shroud.

A smart sprayer for use with a precision agriculture implement to apply treatment materials to selective application sites can comprise: a shroud; a first spray head located within the shroud and positioned to direct a first treatment material toward one of the selective application sites as it is traversed by the smart sprayer; an airflow generator positioned to direct an airflow around the first spray head and toward the one of the selective application sites; and a mixer located coaxially around the first spray head, the mixer for mixing the airflow and the treatment material. The smart sprayer can further comprise a second spray head located within the shroud and positioned to direct a second treatment material toward the one of the selective application sites as it is traversed by the smart sprayer. The smart sprayer can further comprise a second spray head located within the shroud and positioned to direct the first treatment material toward another one of the selective application sites as it is traversed by the smart sprayer. The smart sprayer can further comprise a second spray head located within the shroud and positioned to direct a second treatment material toward the one of the selective application sites as it is traversed by the smart sprayer, and wherein a spray pattern of the first spray head is different than a spray pattern of the second spray head.

A smart tool arm system for a precision agriculture implement for use with commodity plants in a commodity field can comprise: a modular tool arm for coupling with the precision agriculture implement, the tool arm including: a machine vision module coupled to the modular tool arm and including at least one digital camera; an agricultural tool mount; and a height adjustment mechanism for translating the first agricultural tool mount along a vertical axis; and a plurality of modular agricultural tools selectively couplable with the first agricultural tool mount, the plurality of modular agricultural tools including a first sprayer.

The first sprayer can comprise a shroud, an airflow generator, and a spray head; and one of the modular tool arm and the precision agricultural implement includes a control processor. The control processor can control the height adjustment mechanism to position a bottom of the shroud within a preselected distance from one of the commodity plants and the commodity plant bed. The control processor can control the height adjustment mechanism to position a discharge tip of the spray head a preselected distance from the commodity plants based at least in part on a spray angle of the spray head and the size of each of the commodity plants.

The first sprayer can further comprise a first valve for selectively supplying a treatment material to the spray head; the machine vision module and control processor can identify and locate relative to the first sprayer at least one of the commodity plants or a non-commodity plant for treatment; the processor can selectively actuate the first valve to apply treatment material as the first sprayer transients at least one of: a commodity plant, a non-commodity plant, and an area around the commodity plants. The first sprayer can further include a flowmeter and the control processor calculates and stores an amount of treatment material applied by the first sprayer to each of the at least one of the commodity plants or a non-commodity plant identified and located by the processor.

The first sprayer can further include a second valve for regulating the discharge rate of treatment material from the first sprayer; the processor can be configured to receive a treatment protocol for each of the at least one of the commodity plants or a non-commodity plant identified and located by the processor; and the processor can control at least one of the first valve and the second valve to selectively discharge treatment material based on the treatment protocol received.

The plurality of modular agricultural tools can include a second sprayer; the first sprayer and the second sprayer can be coupled to the agricultural tool mount; and the control processor can position the modular tool arm so that the first sprayer is aligned with a first plant line detected by the machine vision module and the second sprayer is aligned with a second plant line detected by the machine vision module. One of the modular tool arm and the precision agricultural implement can include a control processor; and the plurality of modular agricultural tools selectively couplable with the first agricultural tool mount further includes a cultivating tool selectively actuatable by the control processor.

Additional features of the disclosure will become apparent to those skilled in the art upon consideration of the following detailed description of the illustrative embodiment.

### BRIEF DESCRIPTION OF THE DRAWINGS

The detailed description particularly refers to the accompanying figures in which:
Fig. 1 is a bottom perspective view of a smart sprayer tool attachment 400a according to the present disclosure;
Fig. 2 is a partially exploded perspective view of the smart sprayer 400a of Fig. 1;
Fig. 3 is a bottom perspective cross-sectional view of the smart sprayer 400a of Fig. 1;
Fig. 4A is a side cross-sectional view of the smart sprayer 400a of Fig. 1;
Fig. 4B is a side cross-sectional view of an alternative embodiment of the smart sprayer 400a of Fig. 1;
Fig. 5 is an elevational view of a tool arm 300 of an agricultural implement 100 of Fig. 11A shown equipped with the smart sprayer 400a of Figs. 1-4;
Fig. 6A is a first side perspective view of a backbone of tool arm 300 of Fig. 5;
Fig. 6B is a second side perspective view of a backbone of tool arm 300 of Fig. 5;
Fig. 7 is a side perspective view of the tool arm 300 of Fig. 5;
Fig. 8 is a partial top side perspective view of the tool arm 300 of Fig. 5.
Fig. 9 is an end side perspective view of the tool arm 300 of Fig. 5;
Fig. 10 is an end side perspective view of the tool arm 300 of Fig. 5 with z-axis slide tables 380;
Fig. 11A is a cross-sectional top view of the agricultural implement 100 illustrated in a first state;
Fig. 11B is a cross-sectional top view of the agricultural implement 100 illustrated in a second state;
Fig. 12A and 12B are a schematic diagram of a hydraulic system 150 of the agricultural implement 100 of Fig. 11A;
Fig. 13 is a schematic block diagram of an electrical system 180 and control system 200 of the agricultural implement 100 of Fig. 11A;
Fig. 14 illustrates commodity bed 52 worked with prior art implements;
Fig. 15 shows an illustrative process of a portion of agricultural implement 100 of Fig. 11A working a plant line 62 of commodity bed 52;
Fig. 16 is an illustrative state machine for operating agricultural tool attachments 400a-b; and
Fig. 17 is an illustrative process of training and operating the agricultural implement of Fig. 11A for a commodity plant field operation.

### DESCRIPTION OF THE ILLUSTRATIVE EMBODIMENTS

For the purposes of promoting and understanding the principles of the invention, reference will now be made to one or more illustrative embodiments illustrated in the drawings and specific language will be used to describe the same.

An illustrative smart sprayer tool attachment 400a for a precision agricultural implement 100 includes a mount 440 for coupling the sprayer tool attachment to a modular smart tool arm 300 of the implement, and a single spray head 410a, an airflow generator 460, a treatment material valve 420a, and an inspirator mixer 470, all located within a containment shroud 430. The smart sprayer 400a is one of various alternative agricultural tools that can be selectively coupled to and be operated by a control system 200 of the common platform precision agricultural implement 100, including a machine vision module 500 used in identifying and locating commodity plants 60, non-commodity plants 70, and in positioning the agricultural tool attachments 400a-b laterally (x-axis 90) and vertically (z-axis 94) relative to commodity plant lines 62.

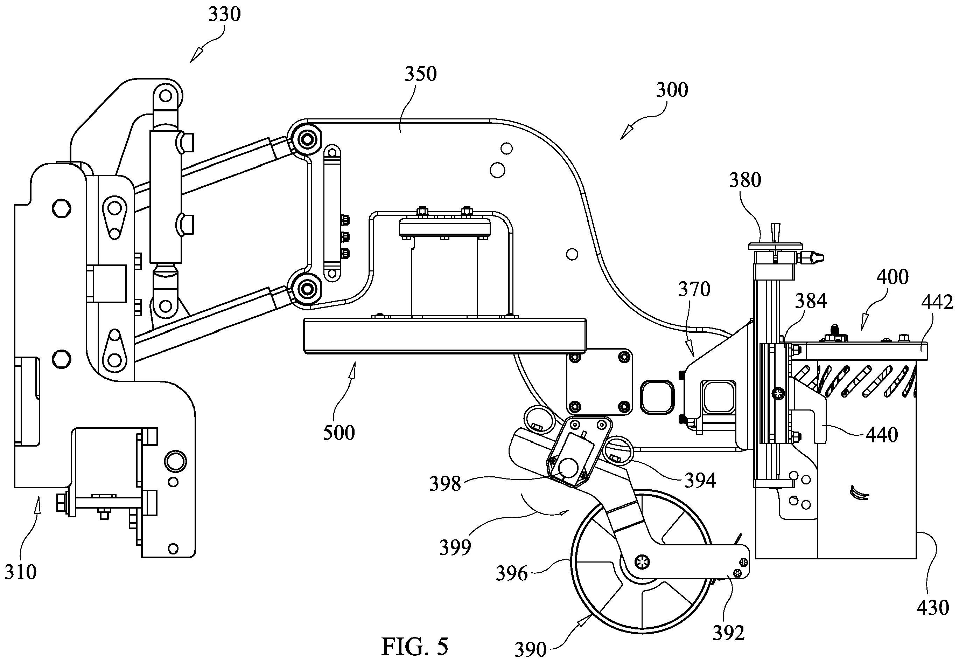

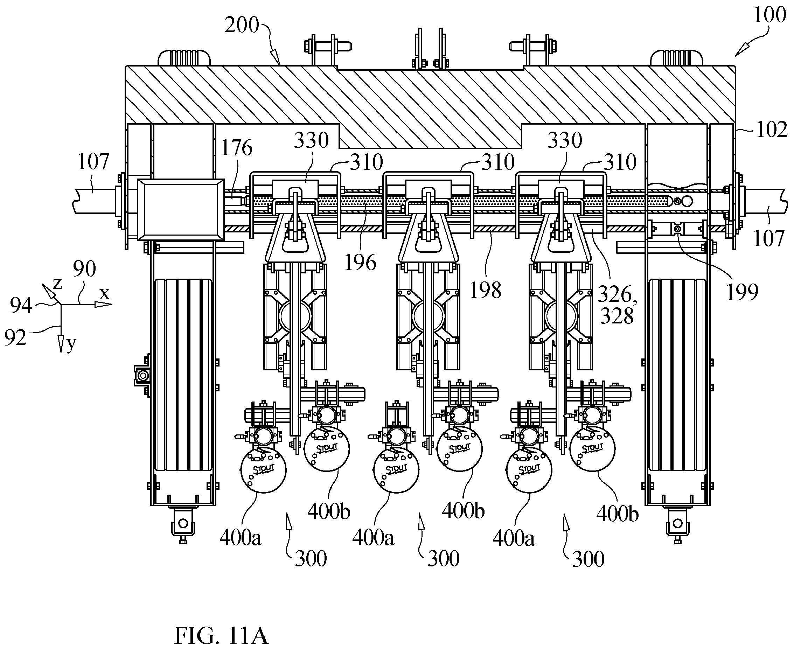

Referring to Fig. 11A, a cross-sectional top view, an illustrative embodiment of modular precision agricultural implement 100 is shown. Implement 100 includes generally a chassis 102, control system 200, and modular smart tool arms 300. For clarity, Fig. 5 illustrates a modular smart tool arm 300 separated from the chassis 102, and includes a sprayer tool attachment 400a for selective, precision application of treatment material in a commodity field 50.

The illustrated implement 100 includes three tool arms 300, each of which include at least one agricultural tool for working a crop and/or field, for example, a pair of tool attachments 400a-b. However, in other embodiments (not shown) fewer than three or more than three tool arms may be used with implement 100. Each of the tool attachments 400 includes one or more agricultural tools for working on a commodity field 50, for example, a commodity plant bed 52. The embodiment illustrated in Fig. 11A shows a pair of cultivator tool attachments 400b coupled to each modular smart tool arm 300. In the embodiment that is the focus of this disclosure, each of the tool attachments 400a includes a sprayer for selective precision application of treatment materials in a commodity field.

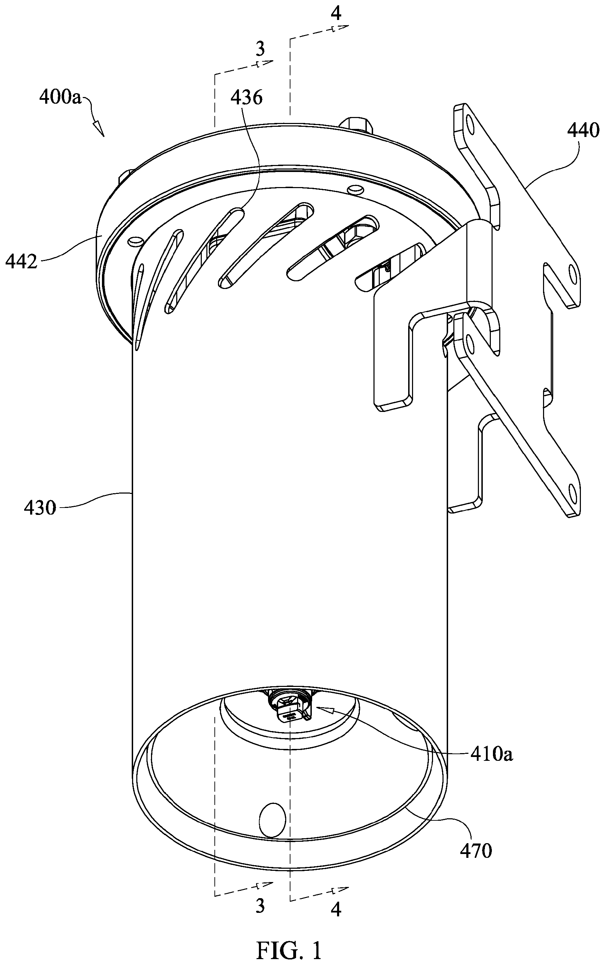

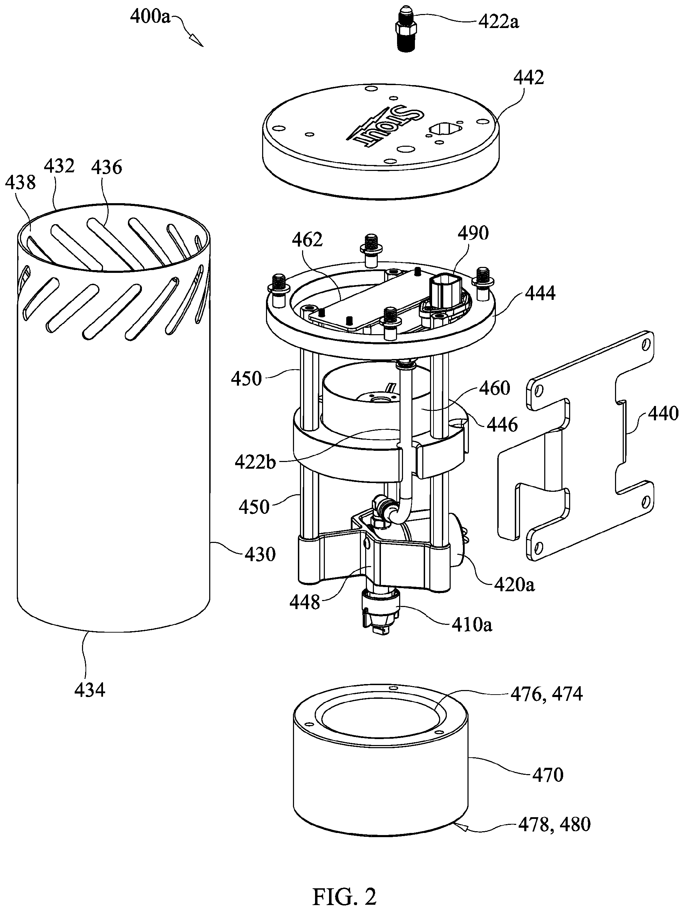

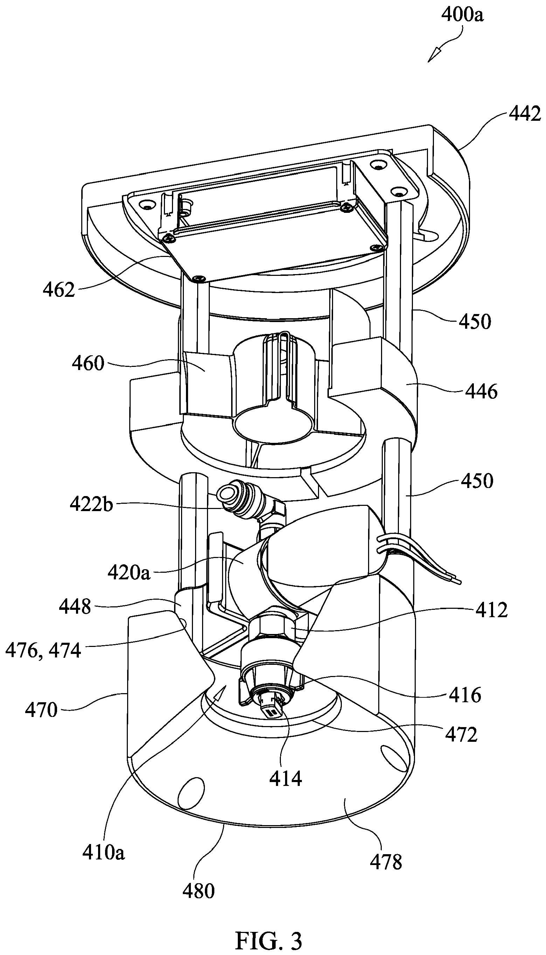

Referring to Figs. 1-4, the sprayer tool attachment 400a will be discussed below in further detail. The illustrative sprayer tool attachment 400a includes generally a bulkhead 442 and an outer containment shroud 430, both of which can be releasably mounted to the modular smart tool arm 300 with a mounting bracket 440. Within the bulkhead 442 and shroud 430 is a support structure formed by an interface ring 444, a fan clamp 446, and a valve mount 448, each of which may be coupled together and to the bulkhead with connecting posts 450, for example threaded hex standoffs.

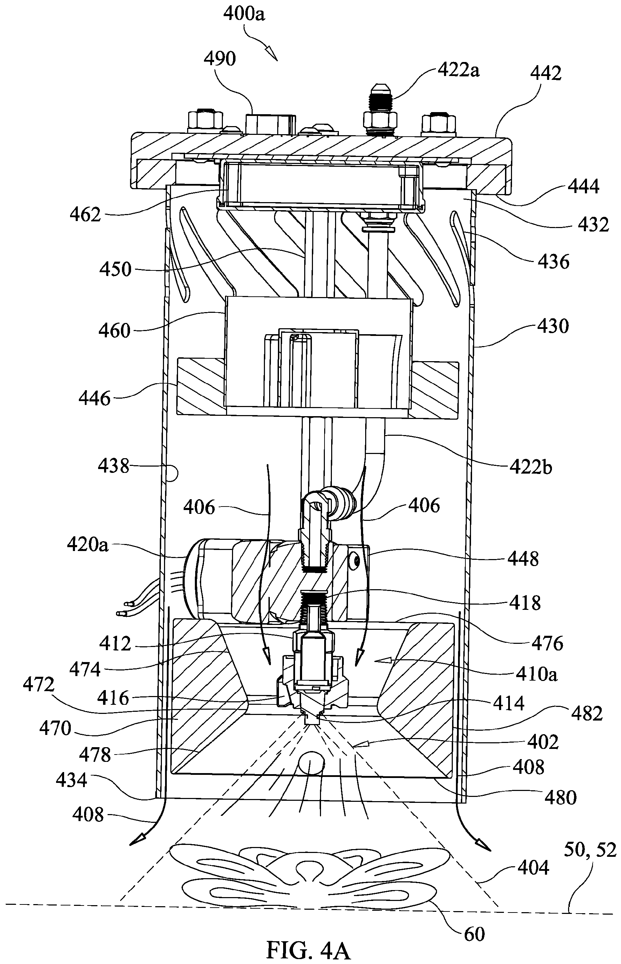

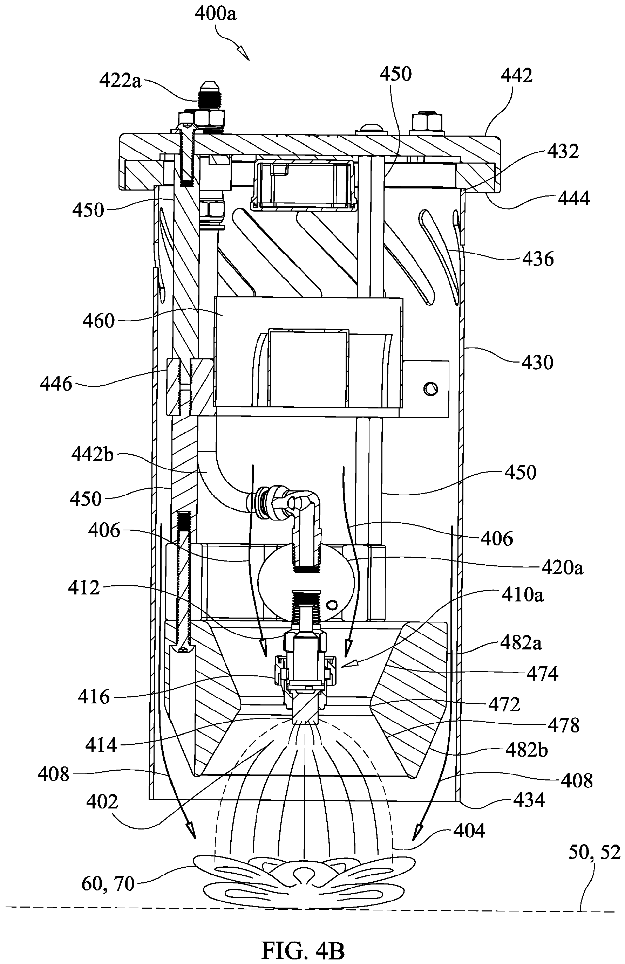

The solenoid valve mount 448 receives and secures a solenoid valve 420 and a spray head 410A for selectively discharging treatment materials supplied by a treatment supply fitting 422a and supply tube 422b, for example, to a selective application site such as the bounds of a commodity plant 60 detected by control system 200 and machine vision module 500. Advantageously, an airflow generator 460, for example, an electric powered axial fan, delivers airflow 406 (Fig. 4) downward around the spray head 410a to further atomize the treatment material as described below, and to provide better penetration of the treatment material into, within, and onto undersides of the plant structure of the commodity plant 60.

An inspirator mixer 470 is also coupled to the valve mount 448 and is located circumferentially around the spray head 410a. The inspirator mixer 470 receives the airflow 406 at an inlet 476, and provides mixing of the airflow 406 with treatment material 402 discharged from the spray head 401, forming a treatment mixture 404 that includes more highly atomized treatment material and is directed out from an outlet 478 of the inspirator mixer at a bottom end 434 of the shroud 430 for application onto and penetration with commodity plant 60 or other selective application site.

Ambient air is drawn into the shroud 430 by the airflow generator 460, for example, through vents 436 defined through the shroud 430, for example located adjacent a top end 432. Advantageously, an airflow controller 462 may be used to adjustably control the volume of airflow 406 generated by the airflow generator 460 and delivered to the inspirator mixer 470. For example, in one embodiment the airflow 406 volume is within a range of between 300 CFM and 500 CFM. In many applications, the airflow generator 460 can operate continuously while transiting a commodity field 50. In contrast, in one embodiment the solenoid valve 428 can selectively enable and disable a flow of treatment material to the spray head 410a in order to precisely discharge treatment material to the selective application sites of the commodity field, for example only upon the sprayer tool attachment 400a transiting over selected commodity plants 60, or all around but not on the commodity plants, or only on non-commodity plants 70, such as weeds, or on select commodity plants to be thinned or otherwise treated, for example to bring all commodity plants to an equal maturity and/or size at harvest time. In another embodiment, selective application of treatment material may include varying with a regulating valve 424 the flowrate and/or volume of treatment material applied to a particular commodity plant 60, for example, based on size or other state of health, including detection of a pathogen or disease, for example, as detected via vision module 500 and control system 200, or as provided as data to control system 200 for a treatment protocol for each commodity plant or subsets of commodity plants. In another embodiment, selective application of treatment material includes both selectively enabling and disabling flow with solenoid valve 420a and selectively varying the flowrate with a regulating valve 424, such as is discussed below. In yet another embodiment, selective application of treatment material includes selectively enabling and varying the signal to a proportional solenoid valve 420a or selectively enabling and varying the duty cycle of a high-frequency solenoid valve 420a to control the discharge and rate of discharge of the treatment material.

For example, selective application sites for a precise discharge of treatment material may be a series of individual selected commodity plants 60 in a plant line 62, with the solenoid valve 428 operated for the sprayer attachment tool 400a to selectively apply treatment material to an individual commodity plant 60 as a selective application site, and to repeat the process for subsequently selected individual commodity plants traversed in the plant line 62.

An electrical connector 490 mounted with the bulkhead 442 can provide power and control signals from the implement 100 for the airflow controller 462 and the solenoid valve 420. Airflow controller 462 can be, for example, model number 20-1003 available from Steele Racing Products of Tucson, Arizona. The solenoid valve 420 can be, for example, model number Series 20 22H9DGM 24/DC available from Peter Paul Electronics CO., Inc., of New Britain, Connecticut.

Additional components of the sprayer tool attachment 400a which may be located with the structure shown in Figs. 1-4, or alternatively located with the modular tool arm 300, or alternatively located with the implement 100, include a regulating valve 424 (for example, diverter valve model number 21CC7-20DJ0-P31, available from KZ Valve of Greenwood, Nebraska), a flowmeter 426, a pump 428 for the treatment material supply (for example, model 5538-2E1-94A available from REMCO industries of Alexandria, Minnesota), and a treatment material tank 429. The regulating valve 424 may be used to set a flowrate of the treatment material supplied to the solenoid valve 420a and spray head 410a, for example, a pressure regulator that determines flowrate in combination with a selected discharge tip 414 portion of the spray head 410A. The regulating valve 424 may also be controlled by the control system 200 to provide a desired concentration or volume of treatment material to each selective application site. The flowmeter 426 may measure the treatment material supplies to a single tool attachment 400a, all the tool attachments 400a for a single tool arm 300, or all the tool attachments 400a of an implement 100.

In the illustrative embodiment, the discharge tip 414 is coupled to the sprayer body 412 with a sprayer cap 416, and may be an industry standard spray tip. For example, spray head 410a can include QJ1/4TT-NYB QuickJet Nozzle Body, CM114443-1-CELR cap and gasket, and TJ60-11003VS TwinJet discharge tip providing twin flat fan patterns of 110 degrees x 20 degrees and 0.35 GPM of treatment material at 50 PSI, or 6505 discharge tip, providing a flat fan pattern of 65 degrees x 20 degrees and 0.5 GPM of treatment material at 50 PSI, all available from TeeJet Technologies of Glendale Heights, Illinois.

Advantageously, in the illustrative embodiment the spray head inlet 418 receiving treatment material is located immediately adjacent the solenoid valve 420a that switches the supply of treatment material on and off. This most proximate location of these two components, coupling them directly, minimizes the dead zone, i.e., the volume of treatment material located between the solenoid valve 420a and the discharge tip 412. Minimizing the dead zone thereby reduces the volume of residual drip of treatment material after solenoid valve 420a closes off the supply of treatment material.

Referring to Fig. 4, in the illustrative embodiment the inspirator mixer 470 is of a Venturi type mixer. The airflow 406 is introduced into the mixer 470 at inlet 476 and travels through a converging cone 474, which increases the velocity of airflow 406 to a maximum at throat 472 of mixer 470. Advantageously, discharge tip 414 of the spray head 410a can be located immediately downstream of and adjacent to the throat 472 of the mixer 470, thereby maximize the mixing of airflow 406 and treatment material 402 in the diverging cone 478 before discharging from the inspirator mixer 470 at outlet 480. Additionally, the airflow 406 and the location of discharge tip 414 relative to the structure of the inspirator mixer 470 maximizes the effect of the airflow cleaning off and dispersing any residue treatment material due to the minimized dead zone, thereby minimizing the time and area over which treatment material may be discharged after the solenoid valve 428 terminates supply of treatment material to the spray head 410.

Optionally, an air channel may be formed between an outer surface 482 of the inspirator mixer and the interior surface 438 of the shroud 430, thereby providing an air curtain 408 around the mixture 404 of airflow 406 and treatment material 402, thereby further isolating and directing the treatment material 402 to the selective application site in the commodity field. Referring to Fig. 4B, the air curtain 408 may be particularly directed by the shape of air channel formed between the interior surface 438 of the shroud 430 and the outer surface 482 of the mixer 470.

For example, as shown in Fig. 4B, an angled or otherwise shaped contour 482b of the mixer 482 and/or an angled or otherwise shaped contour of interior surface 438 may by specifically selected to redirect air curtain 408 to redirect mixture 404 of airflow 406 and treatment material 402. For example, the air curtain 408 may be directed to better focus the mixture 404 and reduce the area sprayed as shown in Fig 4B. Similarly, the contour of airflow 406 may be redirected by the selected contour of diverging cone 478 to redirect the spray of treatment material 402, for example, to better focus mixture 404 and reduce the area sprayed as shown in Fig. 4B. Variations of the angles and contours of these surfaces can be selected to redirect and or isolate the coverage of mixture 404, including to reduce the delivery angle about one or two axes. Additionally, the proportion of airflow from airflow generator 460 directed to airflow 406 through the mixer 470 and directed to air curtain 408 around the mixer may be selected as desired by changing the relative size and/or contours of the above discussed structures through which airflow 406 and air curtain 408 flow, and additionally of contour 482a. This includes widening the channel formed between shroud 430 and exterior surface(s) 482, 482a, 482b of mixer 470 relative to the area of inlet 476, and/or providing a baffle structure between the mixer 470 and fan 460 to divert airflow as desired.

The illustrative embodiment of sprayer attachment tool 400a includes a shroud 430 having a diameter of 6 inches and a height of 12 inches. The mixer 470 includes an inlet 476 diameter of 4.1 inches, a throat 472 diameter of 2.5 inches, and an outlet 480 diameter of 5.3 inches. The mixer outlet 480 is located 0.5 inches above the bottom end 434 of the shroud 430 and the spray discharge tip 414 is located 0.5 inches below the midpoint of the throat 472 and 1.5 inches above the bottom end of 434 of the shroud 430. The converging cone 474 has an included angle of about 45 degrees and reduces the cross-sectional area from the inlet 476 to the throat 472 by about one-third. The diverging cone 478 has an included angle of about 90 degrees and expands the cross-sectional area from the throat 472 to the outlet 480 by about five-times. Advantageously the diameter of shroud 430 and dimensional and angular features of the mixer 470 can be selected based on the features of the commodity plant 60 to be treated, including the size of the commodity plant at the stage of maturity at the time of application, the size of weeds 70 being sprayed, and other features of treatment material and the desired mixture 404 of airflow and treatment material to be discharged from the mixer 470. Other embodiments include a shroud 430 having a diameter between 3 to 9 inches and a height between 6 to 18 inches.

Related selections for the sprayer tool attachment 400a to maximize application of treatment material for the commodity plant 60 features also include the distribution provided by the selection of a particular industry standard spray discharge tips 414, flowrate of the airflow 406, and the height of the discharge tip 414 and shroud bottom end 434 above the commodity plant 60 and/or working surface 58 of the commodity field 58. For example, in one illustrative application the bottom end 434 of the shroud 430 may be set for a height between 2 to 4 inches above the working surface 58 of the commodity field 50, and in another illustrative application the bottom end 434 of the shroud 430 may be set for a height of less than 2 inches above the working surface 58 of the commodity field 50. These selections may be set by the operator using manual adjustment of the tool arm 300, using the control system 200 HMI, or by the control system 200 automatically based on the machine vision module 500 detection of the size of the commodity plants 60. The control system 200 may operate the tool arm 300 to lower the sprayer tool attachment 400a to a preferred height for each treatment material application, for example, upon the sprayer transiting each commodity plant 60, and lift the tool arm 300 between commodity plants, thereby limiting the risk of damage to the commodity plants 60 and/or the sprayer tool attachment 400a. Alternatively, the control system 200 may operate the tool arm 300 to maintain the preferred height of the sprayer tool attachment 400a for the full length of a plant line 62.

An alternative embodiment of tool attachment 400a includes more than one spray head 410a within shroud 430 and optionally also includes more than one solenoid valve 420a in order to selectively operate each of the spray heads 410a, for example, to apply different treatment materials, to apply with different features of the spray discharged, for example, different spray patterns, or to apply to different areas relative to the tool attachment 400a.

An alternative embodiment of tool attachment 400b includes a pair of cultivator actuating tools 410b, in this example hoes used for cultivating. In Fig. 11A, the tools 410b are shown in an open position; however, upon actuation, each pair of tools 410b travel together, closing the space there between. Aspects of the tool attachments 400a-b and the control system 200 (computing and select other components of which may also be referred to collectively as 'controller' herein) may be adapted to providing intelligent tasks, for example, cultivating, thinning, selective spraying, data collection, planting, and harvesting. Selective spraying can include actuation and/or controlled movement of to direct delivery from spray heads or other delivery devices to apply wet or dry chemicals to commodity plants 60 or weeds 70, selected varieties of each, or both. Advantageously, chassis 102 and tool arms 300 can be used thereby used with a number of different modular and releasably attachable precision tool attachments 400 in addition to the illustrative tool attachments 400a-b disclosed herein.

Advantageously, chassis 102 can be propelled across commodity field 50 using standard farm equipment, for example a tractor having a suitable power takeoff (PTO) drive shaft and a hitch (not shown) to pull and operate chassis 102. As will be discussed further below, the hydraulic system 150 and electric system 180 can both be powered by hydraulic pump 152 driven by the tractor PTO.

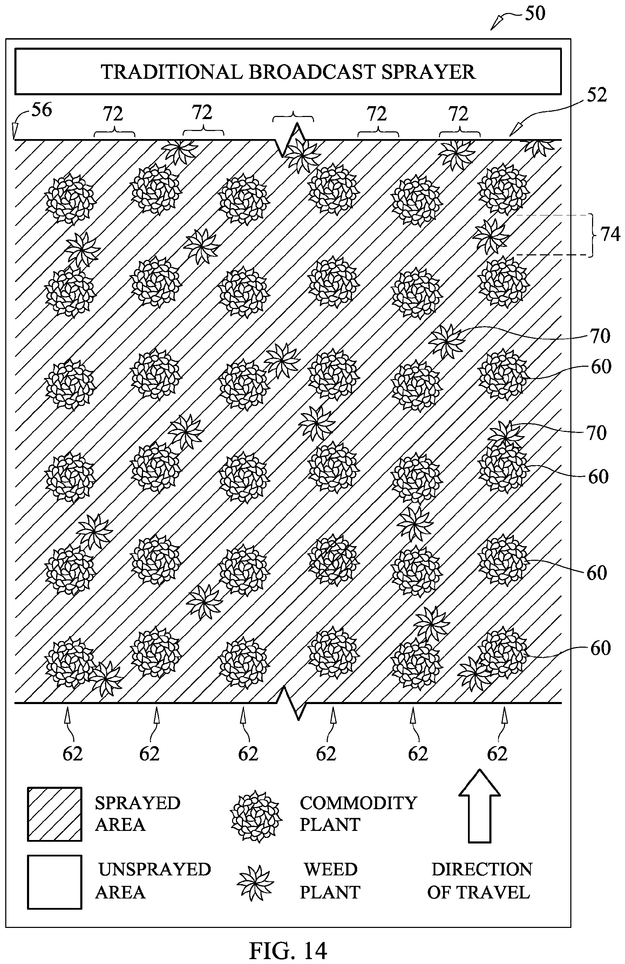

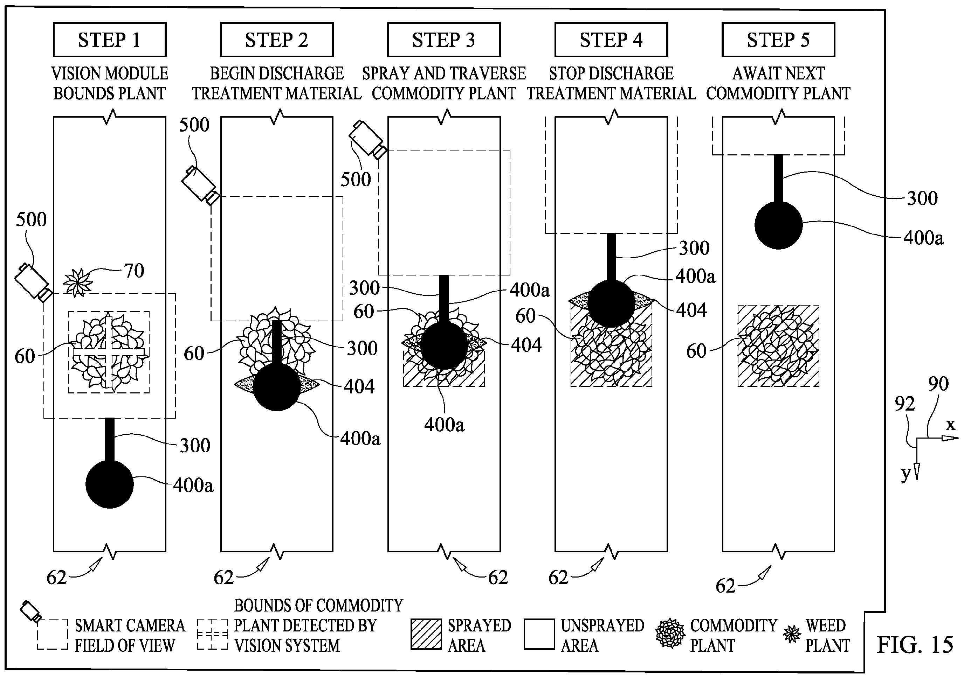

To understand an illustrative application of the illustrative implement 100 equipped with tool attachments 400a-b, refer now to Figs. 14 and 15. Referring first to Fig. 14, commodity field 50 includes raised beds 52, each bounded along the sides and separated by furrows 56. An illustrative western specialty row crop, for example, romaine lettuce, is illustrated as commodity plant 60. As illustrated in bed 52 of Fig. 14, spraying a treatment material using traditional broadcast spraying implements applies treatment material not only to commodity plants 60, but also to weeds 70 that grow within plant lines 62 and the spaces 74 between commodity plants 60, but also the spaces 72 between plant lines 62. Referring to Fig. 15, a portion of the process and features for one application of the illustrative sprayer tool attachment 400a is illustrated.

Referring to step 1 of Fig. 15, as implement 100 is operated along plant lines 62 of commodity field 50b, a control system 200, including a vision module 500 and perception system 270, classifies and locates each commodity plant 60 along each plant line 62 so that spray tool attachment 400a coupled to tool arm 300 can work on each plant line 62 of commodity field 50. By determining the center point location and/or bounds of each commodity plant 60 the solenoid valve 420a of sprayer 400a can be actuated to apply treatment material only upon commodity plant 60. For example, as shown in step 2, as spray head 410a approaches each commodity plant 60 along plant lines 62, control system 200 actuates solenoid valve 420a to begin the discharge of treatment material from the spray head, i.e. mixture of treatment material and airflow 404. As as shown in step 3, treatment material is only applied to commodity plant 60, avoiding application of treatment material to the bed and any weeds 70 located around commodity plant 60. Referring to step 4, by determining a location of the center point and the bounds of each commodity plant, as the spray head 410a of the sprayer 400a passes beyond the bounds each commodity plant 60 along plant line 62, solenoid valve 420a is deactivated to terminate the discharge of treatment material from the spray head 410a, thereby avoiding application of treatment material between commodity plants 60 within the line 62, for example, as shown in step 5.

The above listed and additional features of the illustrative implement 100 with which tool attachment 400a-b operation will now be disclosed in further detail.

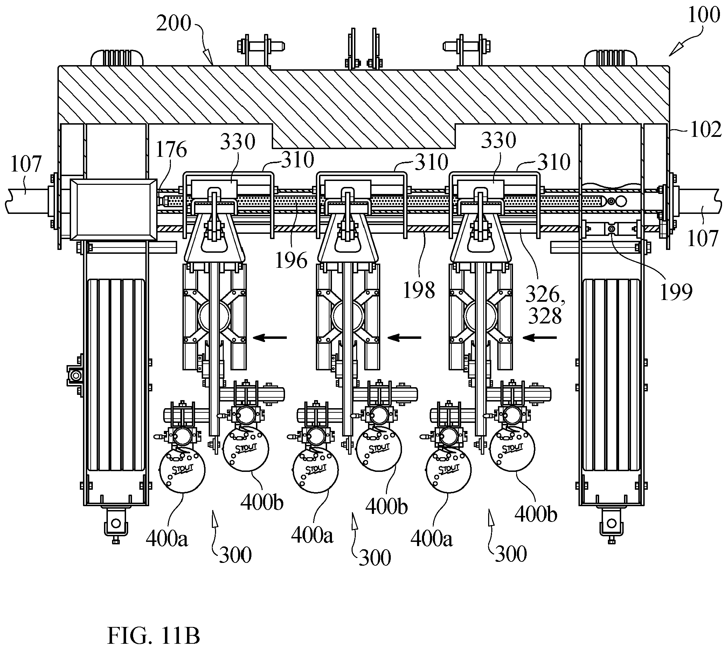

Referring to Figs. 11A and 11B, a chassis 102 provides a universal, smart, modular implement platform for a variety of precision agricultural implement applications. Chassis 102 generally includes a frame 110, wheel assemblies 120, a hitch receiver 140, a hydraulic system 150, and an electrical system 180. Frame 110 can include a front crossbar 104, a rear crossbar or toolbar 106, and end plates 108. Additional features of chassis 102 that also support the mounting and operation of smart tool arm 300 along with toolbar 106 include plant line alignment bar 196, and threaded rod or screw 198, all of which will be discussed further below. A key distinction in the function of toolbar 106, plant line alignment bar 196, and screw 198 is that the toolbar 106 alone supports the weight of the smart tool arms 300, while the screw 198 and the plant line alignment bar 196 respectfully merely adjust the position of and move a portion of each of the tool arms 300 along the x-axis 90.

An illustrative hitch receiver 140 coupled to crossbar 104 can be used to pull chassis 102 with a three-point hitch as is typically found on farm tractors. The hitch receiver includes lower clevises 142 and an upper clevis 146; however, other attachment and hitching systems could be used.

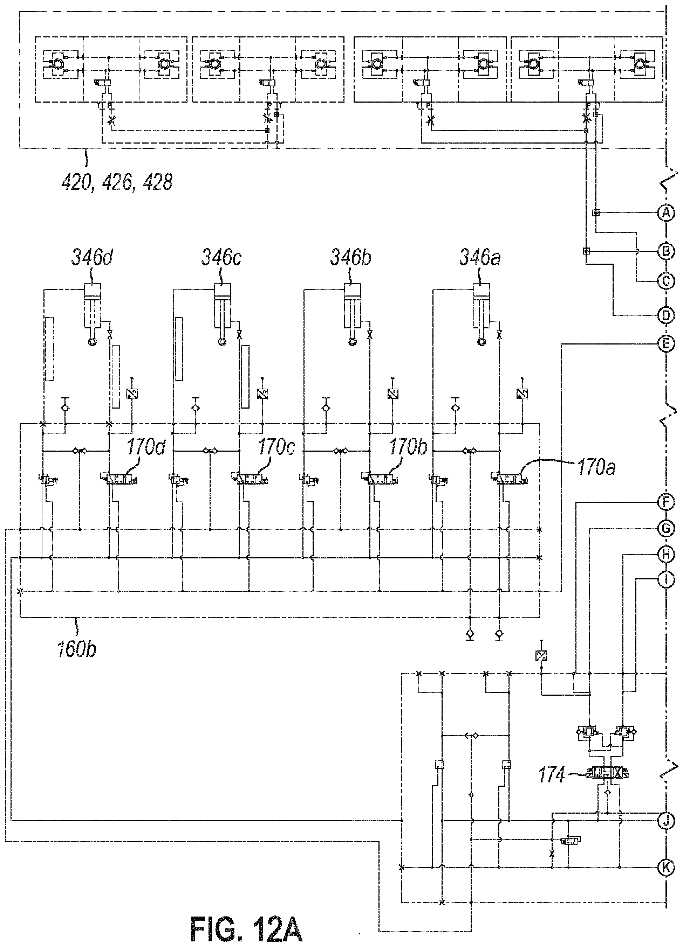

Referring briefly to a schematic of hydraulic system 150 illustrated in Figs. 12A and 15B, the hydraulic system includes generally a power take off (PTO) driven hydraulic pump 152 to power from a tractor pulling the implement 100 the hydraulic system of chassis 102, hydraulic motor 154, reservoir 156, hydraulic oil cooler 158, distribution manifold 160, accumulator 162, and main regulator 164. Hydraulic motor 154 is driven by the hydraulic oil pressure provided by pump 152. Hydraulic motor 154 in turn drives, for example using a flexible belt, an electrical generator, for example, an alternator 182. Alternator 182, for example an automotive type electric alternator, provides DC electric power for electric system 180. Additional controls and actuators of hydraulic system 150 will be described below in further describing other aspects of implement 100.

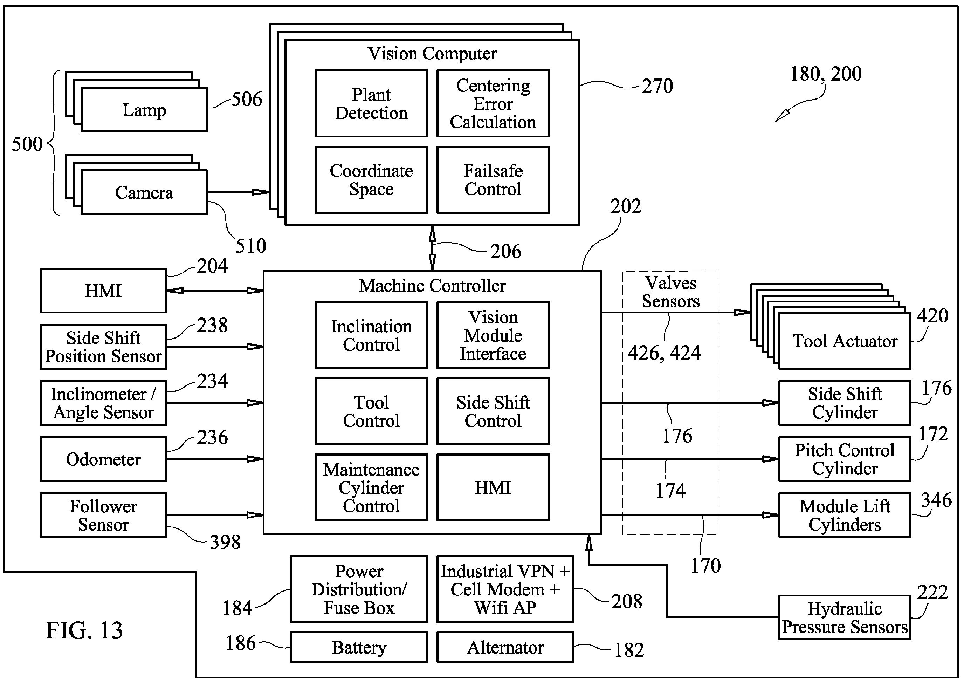

Electrical system 180 of chassis 102 can be alternatively powered by alternator 182 or battery 186. Additionally, alternator 182 is capable of charging battery 186. Electrical system 180 includes a power distribution and regulation module 184 (Fig. 13) that can provide regulated voltage, for example 12 V DC and 24 V DC, and voltage and current transient protection. Electrical system 180 can also power thermostatically controlled hydraulic oil cooler fans 188 and control system 200, which will be described further below.

Additional features of chassis 102 will be discussed further below, following a discussion of the modular smart tool arms 300 that can be supported and operated by chassis 102, for example, as is generally shown in Fig. 11A.

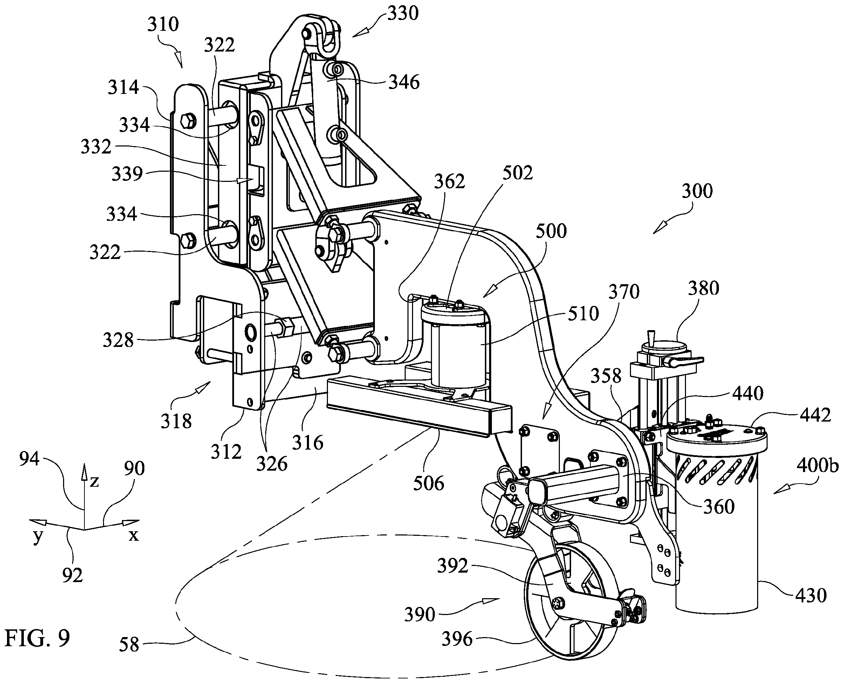

Referring first to Figs. 5 and 11A, for numerous decades, a toolbar, for example toolbar 106 apart from implement 100, has been the common point of attachment for agricultural tools to configure an implement for particular tasks and for particular commodity fields 50, whether it be for plowing, disking, planting, cultivating, spraying, harvesting, or chopping. In contrast, according to the present disclosure, the function of prior agricultural toolbars can be provided and further improved upon by the illustrative tool arm 300 and the tool platform 370 (Fig. 9) provided therewith. Advantageously, various tool attachments, for example, the illustrative tool attachments 400a-b shown in Fig. 9 and 11, can be releasably mounted to and operated by tool arm 300 at tool platform 370. Various aspects of chassis 102, control system 200, and tool arm 300 provide for modular, repeatable, precision in the configuration and intelligent operation of tool attachments 400a-b.

The tool arm 300 is modular in part in that it includes a mounting structure, for example, mount 310 which enables one or more tool arms to be releasably secured to toolbar 106 of chassis 102, for example, as shown in Fig. 11A. The tool arm 300 is also modular in part because of the tool platform 370 and tool attachment 400a-b modularity introduced briefly above and discussed more specifically further below. Tool arm 300 is smart (intelligent) in part because it can optionally include a vision module 500 (Fig. 5), enabling intelligent automated operation of tool attachments 400a-b and optional data collection regarding commodity fields 50, both of which will be discussed further below.

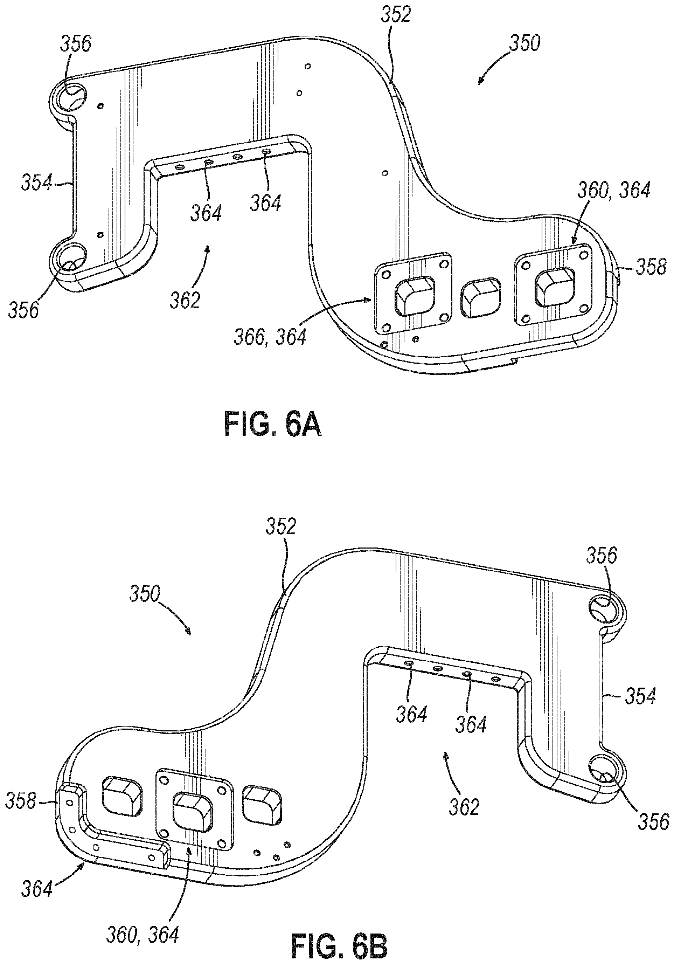

An important aspect of the precision of tool arm 300 is the design and manufacture of a unitary or monolithic member for releasably mounting agricultural tools to, for example, a backbone 350. In the illustrative embodiment shown in Figs. 5-6B, the backbone 350 is milled from a single aluminum billet, for example, approximately 1 to 1-1/2 inch thick, which limits the weight of tool arm 300 while maintaining dimensional stability required for a modular precision agricultural functionality. Backbone 350 can include a number of precision mounting features 364, including for example, the use of location and/or interference fit tolerances in milling and adding features such as receiving bores, threaded bores, locating pins, recesses, and the like. These or other precision features may include with any of linkage mounts 356 adjacent a base end 354, tool mounts 360 adjacent tool end 358, a vision module receiving area 362, and a ground follower mount 366. These features are in contrast to prior art devices providing a tool attachment platform that includes numerous members forming frames and other platforms that lack uniformity of precision between one platform to another and/or that lack dimensional stability and lack light weight that enables precise motion control and ground following of the crop and field operation working portion of the tool arm 300.

As will be evident from the above and below discussions of the operation of implement 100 using control system 200, it is particularly important to maintain precise displacements between the vision module 500, the ground follower 390, and the tool attachment 400a-b, which is why all three are modularly and precision mounted to a billet formed backbone 350.

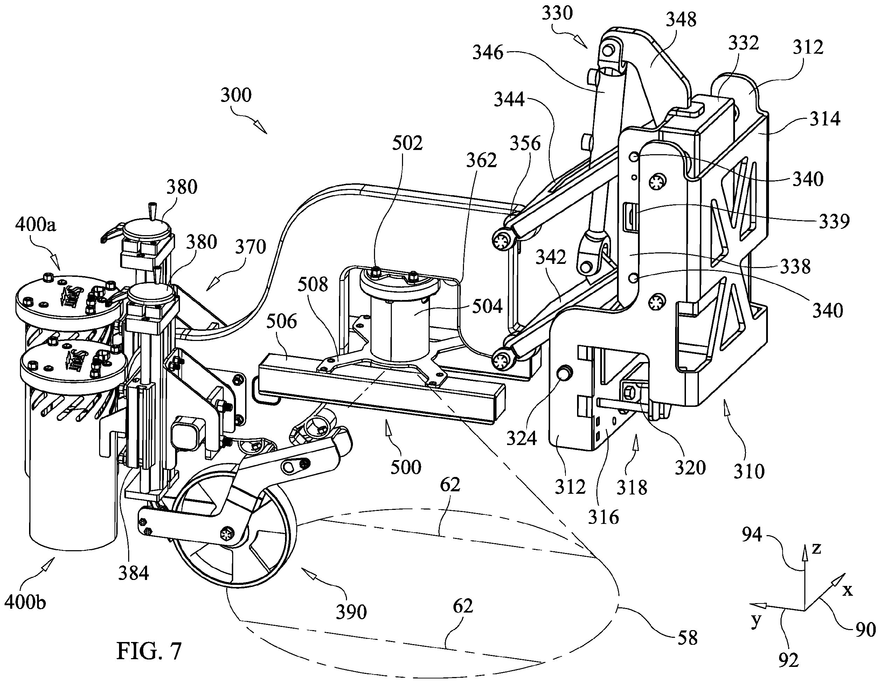

Referring to Figs. 7 and 9, tool arm mount 310 includes sides 312, back span 314, front span 316, clamp 320, and guides 322. Sides 312 are rigidly connected with back span 314 and front span 316. These components can be formed, for example, from 1/4 - 3/8 inch steel or other rigid material. Sides 312 define an opening 318 which is sized to receive toolbar 106 so that mount 310 may be secured thereon, for example, as shown in Fig. 11A. As shown for Fig. 11A, the clamp 320 can be used to fixedly secure mount 310 onto toolbar 106.

A system of adjustment left or right on toolbar 106 is included with the mount 310 and can be utilized before clamp 320 is secured to more easily move tool arm 300 into a desired position along the length of toolbar 106. Referring to Fig. 9, sides 312 also define bores 324 that provide clearance for threaded rod 198 to pass therethrough. Advantageously, by locating a pair of sleeves 326 around threaded rod 198 and between sides 312, and locating a threaded adjustment nut 328 between the sleeves 326, small adjustments left and right to mount 310 along toolbar 106 can be made. For example, by holding one of adjustment nut 328 and coupling 199 from rotating, while at the same time rotating the other about threaded rod 198, the mount 310 will shift left or right depending on the direction of rotation. For example, a coupling 199 is secured to the threaded rod 198. If coupling 199 is held to prevent rotation while threaded adjustment nut 328 is rotated about the threaded rod 198, the nut will translate left or right on the thread, thereby translating sleeves 326 and mount 310 left or right with it.

Referring again to Figs. 7 and 9, backbone 350 of tool arm 300 is coupled to mount 310 by articulating base 330. Advantageously, articulating base 330 provides translation of backbone 350 along the x-axis 90 and the z-axis 94 relative to mount 310. The x-axis 90 is the axis parallel to the longitudinal axis of toolbar 106, and the z-axis 94 is the vertical axis perpendicular to the longitudinal axis of toolbar 106 and perpendicular to the working surface 58 of a commodity field 50. The articulating base 330 includes generally a linear slide table 332, linkages 342 and 344, and a lift actuator, for example, a lift hydraulic cylinder 346 for vertically supporting and translating backbone 350 relative to the mount 310.

Referring to Fig. 9, linear slide table 332 includes linear bearings 334 that translate along guides 322 of mount 310. More specifically, guides 322 can be hardened cylindrical rods that provide a precision and wear resistant surface for linear bearings 334 to ride upon. This configuration advantageously allows backbone 350 and attached tool attachment 400a-b to translate smoothly and precisely along the x-axis 90 of chassis 102 particularly because movement of the excess mass that would be involved with translating toolbar 106, mount 310, and other additional structure such as frame 110 is avoided.

Still referring to Fig. 9, brackets 338 each define an opening 339 sized for receiving therethrough a plant line alignment bar 196, as is shown in Fig. 11A. Referring to Fig. 11A, advantageously, the linear slide tables 332 of each of the tool arms 300 mounted to chassis 102 can be each clamped to alignment bar 196 such that translation of the alignment bar 196 along its longitudinal axis, for example using hydraulic cylinder 176 actuated by side shift valve 178, will simultaneously and equally shift the slide tables 332 and attached backbones 350 and tool attachments 400a-b of each of the tool arms 300.

For example, referring to Fig. 11B and comparing it to Fig. 11A, in Fig. 11B the hydraulic cylinder 176 has been retracted, shifting plant line alignment bar 196 to the left and translating with it the articulating base 330, backbone 350, and tool attachment 400b portions of the tool arms 300. The spacing of the tool arms 300 relative to each other remains precisely the same. Additionally, the large mass components such as mounts 310 of tool arm 300, toolbar 106 and other portions of frame 110 and chassis 102 remain in place. This alignment functionality of the tool arms 300 on implement 100 can also be used with sprayer tool attachment 400a and other such tool attachments used to work commodity field 50.

The movement of the least amount of mass as practical to precisely, smoothly, and quickly shift the tool attachments 400a-b left and right overcomes various disadvantages found in prior machines. For example, the actuation of hydraulic cylinder 176 left or right can be used to continually and precisely align tool attachments 400a-b with plant lines 62 of the commodity field 50 to account for shifts in plant lines 62 that occurred during planting and to account for shifts in the tractor pulling chassis 102. Additionally, the control system 200 may include a side shift position sensor 238 (not shown), for example a switch indicating when plant line alignment bar 196 is centrally located, left of center, and right of center, or, alternatively, an absolute position encoder can be used, either of which facilitate closed loop control of the position of plant line alignment bar 196 and thus the position of tool attachments 400a-b in alignment with plant lines 62.

Referring to Fig. 7, an illustrative four-bar linkage is formed in part by a bottom link 342 coupled between pivot 340 of bracket 338 and linkage mount 356 at base end 354 of backbone 350. The four-bar linkage also includes top link 344 coupled between pivot 340 of bracket 338 and linkage mount 356 of backbone 350. Cantilever 348 is coupled to the linear slide table 332 that brackets 338 are coupled to, and support an end of the lift hydraulic cylinder 346, the opposite end of which is coupled to bottom link 342 approximately midspan. As arranged, retraction of lift hydraulic cylinder 346 translates backbone 350 and attached tool attachment 400a-b vertically upward along the z-axis 94 to a lifted or retracted position, as is shown in Figs. 7 and Fig. 11A. In other embodiments (not shown) a different pivot and/or linkage structure can be substituted for the four-bar linkage 336 to provide movement through the z-axis 94 for tool arm 300.

The lifted position of tool arm 300 is useful to secure the tool attachments 400a-b attached to tool arm 300 up and away from the ground, for example, when implement 100 is transitioning between commodity fields 50 or between the end of set of plant lines 62 and the beginning of an adjacent set. Additionally, if operating in a field 50 with fewer plant lines 62 per bed 52 than the implement 100 provides, then one or more tool arms 300 can be selectively actuated to and locked, e.g., manually/hydraulically or via system hydraulic controls 210, in the lifted position so that only those required for the number of plant lines are lowered and used, advantageously, without have to physically remove tool arm 300 or components thereof from implement 100. The height of each tool arm 300 relative to the working surface 58 is set by the extension and retraction of hydraulic cylinders 346 for each tool arms 300 attached to chassis 102.

In one embodiment, the height is controlled by controlling the continuous hydraulic pressure applied to each end of the piston of lift hydraulic cylinder 346. In another embodiment, the height is controlled by controlling the continuous differential of the hydraulic pressure applied across the ends of the piston of the lift hydraulic cylinder 346. In yet another embodiment, discussed further below, the height is controlled by setting a continuous regulated hydraulic pressure to one end of the piston of the lift hydraulic cylinder 346, and by continuously controlling the hydraulic pressure applied to the other end of the piston of the lift hydraulic cylinder. For example, a proportional solenoid valve 170 (Fig. 12A) and analog pressure sensors (unnumbered, Fig. 12A) can be used as part of the control of the hydraulic pressure to control the height of the tool arms 300, as can feedback from a height sensor 398 of tool arms 300 above the working surface 58, as is discussed further below.

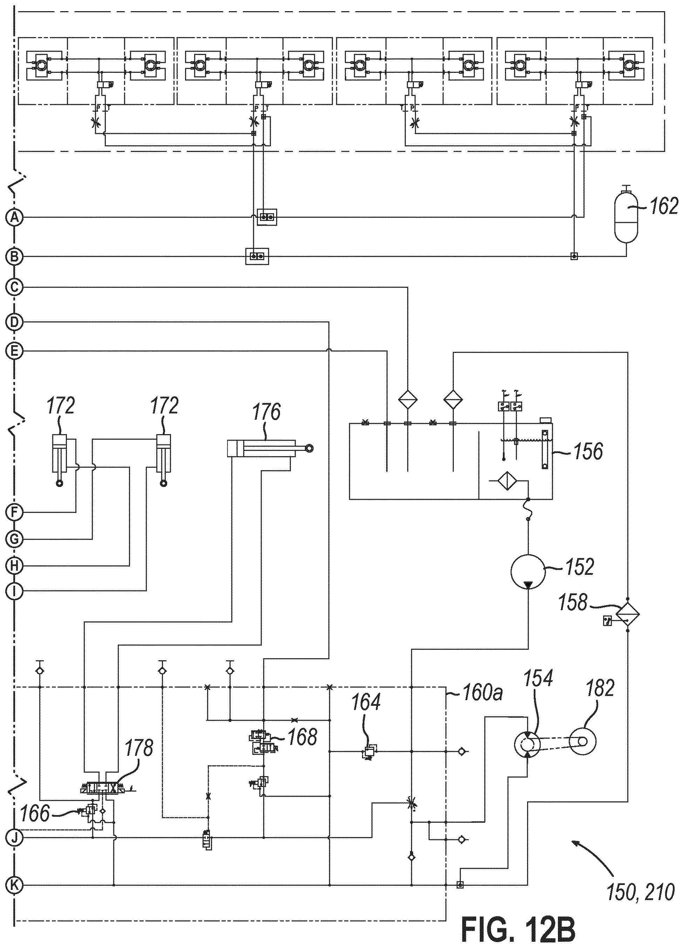

For example, upon reaching the end of plant lines 62, the hitch of the tractor pulling chassis 102 can be used to lift it up by hitch receiver 140. A lift sensor, for example, a pressure switch 218 (Fig. 12A and 12B) associated with gauge wheel hydraulic cylinder 172 can detect that weight is off of the front axle 128 and activate a transit mode of control system 200, or a tilt sensor, accelerometer, ultrasonic sensor, or other motion, orientation, elevation, and distance sensor known in the art may be used. Upon the control system 200 detecting via pressure switch 218 that chassis 102 has been lifted, tool arm lift valves 170 can optionally actuate hydraulic cylinders 346 of the tools arms 300 to lift them to the raised position, thereby providing clearance between tool attachments 400a-b and the ground. Additionally, if side shift position switch or encoder 238 detects the plant line alignment bar 196 is not mechanically centered, along with tool arms 300, then control system 200 actuates side shift valve 178 and side shift cylinder 176 to a reset position, for example, the alignment bar 196 and attached tool arms 300 are returned to mechanical center of the chassis 102 for the next operation. Additionally, control system 200 can deactivate the processing by vision module 500, perception system 270, and control of tool attachment 400a-b by ruggedized controller 202 until the chassis 102 has been lowered and weight is again detected on front axle 128 via pressure switch 218, thereby pausing the working of a crop and/or field by an operation of the tool arms 300 at least until the chassis 102 is again lowered.

Returning to the discussion of tool arm 300, lift hydraulic cylinder 346 also can be controlled during operation to lighten the downward force toward the ground of tool arm 300 due to the weight of the various components of the tool arm. By applying hydraulic pressure to each actuation end of lift hydraulic cylinder 346, as introduced above, and individually controlling each of those pressures, thus also controlling the differential pressure, the amount of downward force operating on each tool arm 300 is very dynamically controllable, and responsiveness to following changes in the soil profile/level in the bed 52 for each of the individual tool arms 300, as will be discussed further below in the section further discussing the control system 200.

In a working or down position in which lift hydraulic cylinder 346 is at least partly extended (not shown) the various tool attachments 400a-b attached to the illustrative embodiment of the tool arm 300 are configured to operate with a preferred operating depth under or operating height above the surface of the soil of bed 52. Referring now to Figs. 5 and 9, the ground follower 390 of tool arm 300 helps maintain the vertical position of backbone 350 along the z-axis 94 such that the tool attachments 400a-b supported by the backbone 350 remain at a preferred depth or height relative to a working surface 58 of a field 50. In the illustrative embodiment shown in Fig. 5, ground follower 390 includes a lever 392 pivotably coupled at a proximal end to the backbone 350, extending downward at an angle from the backbone, and coupled to a distal end of the lever is a ski, wheel, and/or other member for contacting and following the working surface 58, for example, a roller 396 rotationally coupled to the lever 392. In the illustrative embodiment, the roller 396 does not support any weight of the tool arm 300 within a normal range of motion through which the lever 392 pivots as the height of backbone 350 above the working surface 58 varies; however, a stop 394, for example, an elastomeric bumper or the like, mounted between the lever 392 and tool arm 300 acts as a mechanical limit to provide a limit to downward reduction of height of the backbone 350 above the working surface 58, thereby limiting the range of downward movement of supported tool attachments 400a-b along the z-axis 94.

The illustrative embodiment also includes a height sensor 398, for example an angular encoder, for determining the relative height of the backbone and thus the working tools to the working surface 58. For example, the height in the illustrative embodiment is based on an lever pivot angle 399 of the lever 392 to the backbone 350, which changes as the mass of the lever 392 and roller 396 keeps the roller 396 in contact with the working surface 58 as a z-axis distance between the backbone 350 to the working surface 58 changes. In other embodiments the height sensor may be a ranging, accelerometer, or other sensor capable of determining the relative height of the backbone 350 or tool attachments 400a-b to the working surface 58.

The z-axis 94 location of the end of the various tool attachments 400a-b attached a tool arm 300 are generally set at a desired depth or height relative to the bottom of roller 396 and ski 398. By the control system 200 controlling the hydraulic pressure applied to a first port of the lift hydraulic cylinder 346 to provide upward lift to backbone 350, at least a portion of the weight/mass of and supported by the tool arm 300 is supported and the downward force of the roller 396 is reduced in order to prevent soil compaction and excess lowering of the tool arm, while also maintain enough downward force and system responsiveness to follow the elevation of the soil surface of the bed 52 being worked.

For example, in an illustrative embodiment, a continuous regulated hydraulic pressure of 600 psi provided to a first port of lift hydraulic cylinder 346 that provides upward movement of the backbone 350, and a continuous regulated hydraulic pressure of 200 psi provided to a second port of lift hydraulic cylinder 346 that provides downward movement of the backbone 350, provides a desired 'float,' i.e. upward offset or relief of the weight of and supported by the tool bar 300, to provide responsive following of the working surface 58 by the ground follower 390 and thus the tool arm 300 and supported tool attachments 400a-b, while also preventing excessive compaction of the working surface 58 by the ground follower 390, which would extend the working tools downward beyond a desired height relative to the working surface 58.

Furthermore, in the illustrative embodiment, the control system 200 receives data from one or more pressure sensors 222 for measuring the hydraulic pressure at the first and the second port, or the differential hydraulic pressure, along with receiving data from the height sensor 398, which together are used by the control system 200 to actively regulate one of the continuous differential hydraulic pressure between the first and second port, or the continuous regulated pressure applied to the first port, in order to maintain the tool arm 300 and supported tool attachments 400a-b at a desired depth or height along the z-axis 96 relative to the working surface 58. In one embodiment, a proportional hydraulic valve 170 controlled by the control system 200 controls a continuous but variable hydraulic pressure to the first port, feedback of that pressure is provided by the pressure sensor 222, and the continuous regulated backside pressure to the second port is preset and not variably controlled. An advantage in responsiveness and precision in desired height of the tool arm 300 over a working surface 58 having varied conditions and varied elevation is provided over prior art designs by the combination of the continuous and regulated downward pressure supplied to the second port, and the continuous variably controlled upward pressure supplied to the first port of the lift hydraulic cylinder 346. In one illustrative embodiment, a separate proportional hydraulic valve 170 and pressure sensor 222 is used for each of the tool arms 300 and hydraulic cylinders 346. In one illustrative embodiment, the control system 200 incorporates a low pass filter to the height control data from the height sensor 398, and/or other damping to the control of the height of the tool arm 300. In another illustrative embodiment, the lever 392 is fixedly mounted to the backbone 350.

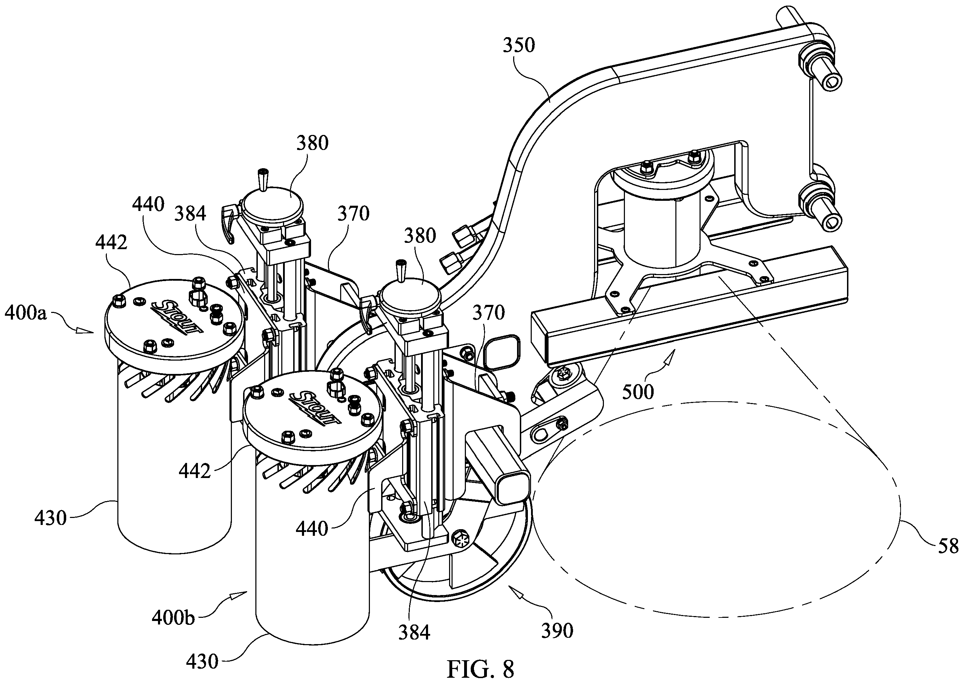

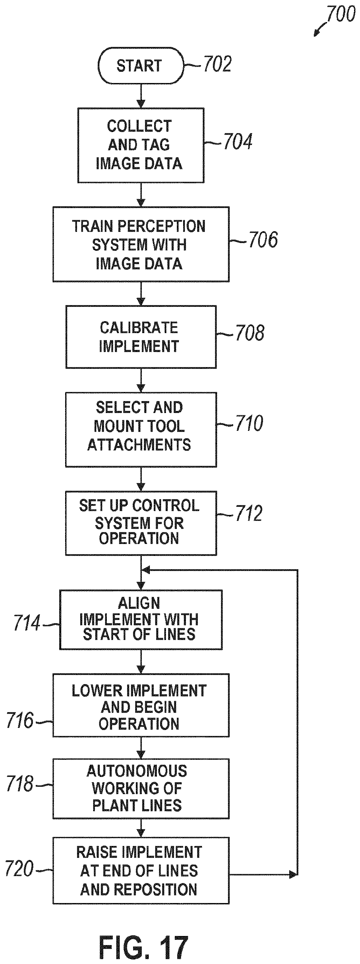

Referring now to Figs. 8 and 17, a vision module 500 includes module housing 504 which can be precisely coupled to backbone 350 by mounting interface 502 and precision mounting features 364, for example precisely located threaded bores and/or locator pins, within a protected vision module receiving area 362. The vision module 500 also includes a pair of lamps 506 coupled to vision module housing 504 by lamp mounts 508. In the illustrative embodiment, the lamps 506 are of sufficient intensity to greatly reduce or eliminate the effects of sunlight and resulting shadows that may otherwise be experienced by vision module 500 and associated perception system 270.

In the illustrated embodiment, camera 510 and optics 516 are packaged with a cylindrical vision module housing 514 and optional module housing lens protector 522.

The correlation of locations and distances within captured images is critical to determining the timing of when to open and close tools 510 to avoid a commodity plant 60 which has been identified in an image captured a known distance ahead of the tool attachments 400a-b, including more specifically, for example, ahead of sprayer head 410a or cultivator tools 410b. To improve the correlation of the location of the commodity plant with the actuation of tool attachment 400a-b, it has been found advantageous to take into account fixed, variable, and asynchronous processes relating to detecting and correlating a commodity plant with the machine-relative coordinate space. For example, applying an image timestamp upon the perception system 270 receiving the first data packet containing part of a new image from the vision module 500, and applying a timestamp to data from the odometer encoder 232 based on the midpoint time between the data request and the receipt of the data.

An example of the coordinate space and tracking of the location of objects of interest and the tools 510 in the coordinate space can be understood from steps 1 thru 5 of Fig. 15, which correlate to the change in relative location of the objects of interest, e.g. commodity plant 60 and weeds 70, and the tool attachment 400a-b as the implement 100 traverses the plant line 62. Although shown in a simplified version with only one plant line 62 in a field of view versus two in the illustrative embodiment, each of the steps 1 thru 5 of Fig. 15 correlates to the x-axis 90 and y-axis 92 dimensions of the coordinate space, divided along each axis into a desired level of pixel or bin resolution that corresponding relates to the images and actual distances imaged and traversed.

Referring to Fig. 9, as shown on the left side of tool in 358 of backbone 350, tool arm 300 also includes a tool platform 370 for modular and releasable mounting of tool attachments 400a-b. For example, a platform toolbar 372 may be precisely located on backbone 350 by a tool mount 360. The platform toolbar 372 can support a tool mount 374, which may include precision locating features such as those discussed for backbone 350 for the precise mounting of tool attachment 400a-b thereto.

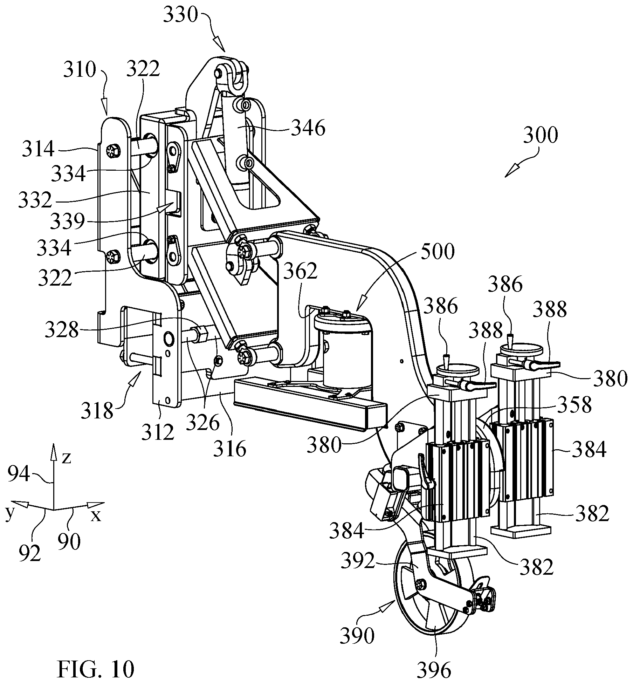

Referring to Fig. 10, optionally the tool platform 370 of tool arm 300 may include a device for adjusting or actuating tool attachment 400a-b relative to backbone 350, for example a z-axis linear slide table 380 as shown in the illustrative embodiment. One reason to include adjustment for each separate tool attachment is due to variations found in commodity fields 50 among different plant lines 62 within the same bed 52. For example, depending on the formation and environmental conditions such as compaction and erosion of bed 52, individual plant lines 62 may vary in height. For example, there may be a crest across the bed 52 such that plant lines on one part of the bed are at a lower elevation than plant lines on another part of the bed, which also may vary from the relative elevation of the furrows within which wheel assemblies 120 of the chassis 102 ride.

In the illustrative embodiment, the slide table 380 provides manual adjustment along the z-axis 94 relative to the backbone 350 of a tool attachment 400a-b mounted to the slide table. The slide table 380 includes linear guides 382 upon which a table 384 may be translated up and down, for example, by cranking adjustment handle 386 and then locking table 384 in the desired position using locking handle 388. The table 384 provides a precision mounting surface for tool attachment 400a-b.

Referring now to Figs. 8 and 11A-B, an illustrative tool attachment 400a-b can be modularly and precisely coupled to tool arms 300. Mounting bracket 440 is coupled to the tool arm 300, for example, to tool platform 370 or optional z-axis linear slide table 380. A crop or field working tool actuator, for example, a valve or other actuator 420a-b of tool attachment 400a-b, can be a hydraulically or electrically driven actuator.

In the illustrated embodiment shown in Fig. 8, the tool arm 300 operates simultaneously on two adjacent plant lines 62; therefore, each tool arm 300 includes a pair of tool attachments 400a-b, one for each plant line 62. The tool platforms 370 on the left and right side of backbone 350 are spaced along the x-axis 90 so that the distance between the two tool attachments 400a-b matches the distance between plant lines 62. Additionally, the illustrative tool arm 300 is equipped with static mounts 302 which can optionally have attached static tools such as cultivators 304, each positioned to cultivate and clear weeds located within the space 72 between plant lines 62. In an alternative embodiment (not shown), the tool arm 300 operates simultaneously on three adjacent plant lines 62; therefore, each tool arm 300 includes three tool attachments 400a-b, one for each plant line 62. For example, a tool platform 370 can be located centered on the backbone 350, and another to each of the left and right side of the backbone 350, all space along the x-axis 90 as discussed above. In yet another embodiment (not shown), each tool arm 300 operates simultaneously more than three tool attachments 400a-b.

As discussed earlier above, illustrative tool attachments 400a include spray heads 410a for applying treatment materials to selective application sites, for example, to commodity plants 60 within plant line 62. Upon operation of spray heads 410a by solenoid valves 420a, treatment material is discharged by the spray heads 410 a onto the commodity plants 50 and not onto the space 72 between the commodity plants 60 within the plant line 62.

Referring to Fig. 11A, in an illustrative embodiment of implement 100, a set of tools arms 300 are provided by coupling toolbar extensions 107 to one or both end of the toolbar 106 of chassis 102. Advantageously, the frame 110, wheel assemblies 120, hydraulic system 150, electrical system 180, and control system 200 have all been sized to accommodate the added loads of three sets of one or more tool arms 300, thereby reducing the number of passes required to complete cultivation of a commodity field 50 by a factor of three.

Referring to Fig. 13, a schematic block diagram illustrates aspects of electrical system 180, including control system 200. Control system 200 can include a ruggedized controller 202, for example, an X90 mobile controller available from B&R Industrial Automation of Roswell, Georgia, and a machine vision / perception computer 270, including a graphics processor (GPU) 272 such as a TX2i available from NVIDIA Corp. of Santa Clara, California. Controller 202 provides overall machine control of implement 100, and perception computer 270 includes processing of images received from vision module 500, including a neural network, for example, a convolutional neural network (CNN) for AI processing of images and optionally other data to classify, locate, and bound objects of interest, including at least commodity plants 60, and optionally other objects, including for example, weeds 70 and debris (not shown), and to provide a confidence level associated with the classification and/or bounding. Classification of objects of interest may include the plant or weed variety, health, for example, including a disease state/type, and other attributes in the art that are knowable optically. Alternatively, a single computing unit may be substituted and provide the machine control, image, and AI processing. Also alternatively, some or all of the functions provided by one or both of the machine controller 202 and perception computer 270 may be provided by the vision module 500. Machine controller 202, perception computer 270, and vision module 500 may be collectively referred to as a control processor or control processing system. The perception computer 270 may also include pre-processing of images prior to processing by the CNN, and/or post-processing of data resulting from the CNN processing of images.

In some implementations or selected use of implement 100, control of the tool attachment 400a-b may only require processing of objects classified as the commodity plant of interest, in other implementations or selected use, control may only require processing of objects classified as weeds or a set of weed types, and in yet another implementation or selected use, control may require processing of both commodity plants and weeds. For example, depending on whether the attached tool attachment 400a-b is being used for weeding, thinning, or application of treatment materials, including selectively on one or both of commodity plants and weeds. In some implementations or selected use of implement 100, control of the tool attachments 400a-b may additionally or alternatively require other image processing, for example, detection of size, color, pathogens, disease, or other attributes of commodity plants 60.

Control system 200 also includes various controls 230, generally interfaced with controller 202, for example via a wireless or wired local area network (LAN) 206, for example, Ethernet. Controls 230 may include HMI 204, for example a touchscreen display device, and various input sensors, including a tilt sensor / inclinometer 234, odometer encoder 236 mounted with axle 124 (Fig. 9), side shift position switch or encoder 238, and various hydraulic pressure sensors 212-222. Control system 200 also includes output controls, generally controlled by controller 202, including valves controlling hydraulic actuators, including cylinders, discussed above. Machine controller 202 thus generally controls solenoid valve 420a to provide treatment material from the spray head 410a only onto commodity plants 60, side shift of tool arms 300 to maintain alignment of the tool attachments 400a-b with plant lines 60, controlling the height of tool arms 300 to maintain proper height of the spray head 410a and shroud 430 bottom end 434, and to lift and/or center tools arms 300 in a transit mode when raising of implement 100 is detected.

Perception computer 270 provides the image processing, including bounding, classification, confidence, and location mapping of objects of interest, including commodity plants 60, to implement the general process illustrated by Figs. 15-17 and discussed further above, including providing the data necessary for some of the processes controlled by controller 202, including the application of treatment material from spray head 410a upon commodity plants 60, and side shifting of the tool arms 300 to maintain alignment of the tool attachments 400a-b with plant lines 60. To do this, perception computer 270 provides generally AI enabled object detection, and maps the detected objects to a relative coordinate space derived from timestamping of displacement data from the odometer encoder 236, image timestamping, and determination of objects of interest, including the centerline of plant lines 62 relative to vision module 500, and thus relative to the tool attachments 400a-b.

Advantageously, the operation of implement 100 is not dependent on GPS or other such absolute or geographic positioning data or systems and can function solely using the relative positions of the plant lines 62 and the commodity plants 60 detected by the perception computer 270. Advantageously, the operation of the control system 200, including perception computer 270 and controller 202, may be autonomous in that it does not require remote data or computer resources; however, a local or remote wireless or wide area network (WAN) connection 208 may be used to remotely monitor, update, or to optionally supplement the data and computing resources of the control system 200.

An illustrative HMI for setup of control system 200 can include selecting a commodity plant type, a unit of measurement, and the spacing between commodity plants 62 with the plant line 60 and the spacing between adjacent plant lines 60.

An illustrative HMI can include entering the distance from the spray head 410a of each tool attachment 400a to the center of field of view of the camera module 500 on that tool arm 300. Other configuration relating to the tool attachment 400a can include timing information relating to the cycling of the discharge of treatment material from spray head 410a by switching of the solenoid valve 420a. Other configuration information includes cooling fan 118 temperature trigger, pressure limit settings and delay and transition times for the actuation up and down for the tool arms 300, odometer 336 calibration for rear wheel 126, ground pressure backside and wheels threshold.

An illustrative HMI can include the overall status of control system 200, voltage of electrical system 180, hydraulic oil pressure and temperature, and settings selected on setup page 242. Additional control settings that can be selected include the distance prior to plant center or plant bounds to activate spray head 410a, the distance after plant center or plant bounds to deactivate spray head 410a, height of the spray head 410a or bottom end 434 of shroud 430 above the ground, pressure and/or flowrate of treatment material supply, and airflow generator speed and/or airflow velocity and/or volumetric flowrate. And finally, a system start/stop selection and a tool arm lift/lower selection is provided.

An HMI 204 can also provide a selectable real-time view from each vision module 500 and an alarm page.

Advantageously each vision module 500, which in the illustrative embodiment includes one camera 510, is centered between two plant lines 60 and has a sufficient field of view for typical spacing between plant lines 60 in beds 52 to have within its field of view and process the classification, confidence, location, and/or bounds for up to at least two plant lines 60 simultaneously, and in some embodiments three or more plant lines. Tracking two plant lines 60 by a single camera and image not only reduces hardware requirements, but also provides for more precise plant line following than is provided by one camera centered on and tracking each plant line. Additionally, for embodiments that limit each camera 510 to tracking two plant lines, instead of tracking all plant lines 60 in a bed 52, better resolution, precision, and data collection is provided by the vision module 50.

Lamps 506 are strobed at an intensity near sunlight levels to minimize the impact of variations in sunlight and on shadows that dependent on environmental conditions and time of day. The set of images and data to train the CNN used with perception computer 270 can nonetheless include images taken in various environmental conditions and times to day to improve functionality.

In the operate mode, the processing and control timing accommodates a rate of travel of implement 100 up to a limit, for example, a limit that ensures every commodity plant 62 will appear in at least two images before that plant will be out of the field of view of the camera 510 and approaching the tool attachments 400a-b. Using such a limit improves classification, locating, and tracking and is also required to ensure tool attachments 400a-b can be operational before the arrival of the plant 62 at the tool attachments 400a-b. Alternative or additional criteria for rate of travel may also be used, including commodity plant or environmental conditions warranting a lower rate than the implement 100 may be technically capable off.

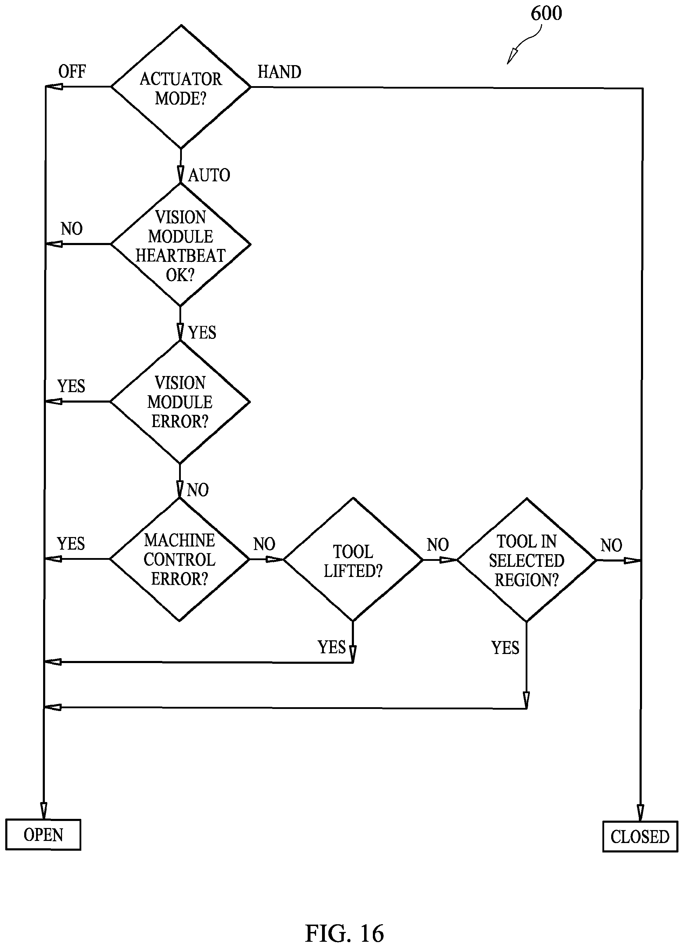

An illustrative state machine for operation of tool attachments 400a-b is shown in Fig. 16.

Pre-processing of image data by vision module 500 or perception computer 270 prior to inference processing by the CNN or other AI model can include, but is not limited to, image timestamping, converting the image color space, for example, to RGB, rotating, rescaling the image, and other pre-processing known in the art.

Additionally, post-processing of the object bounds, location, classification, and confidence provided by the CNN or other AI model can be used to reduce errors and provide some fail safes for the AI processed data. For example, when the operation mode is initiated at the beginning of a plant line 62, the tool attachments may remain inactive until commodity plants have been classified and located for a preset span of distance along plant line 62. Additionally, detected objects with a confidence level below a selected threshold may be ignored or reclassified, as can objects with a bounding size outside of a threshold range.

Also, threshold ranges can be statically selected, or may be dynamically selected or dynamically adjusted based on average, mean, or other data analysis of object detections for a particular bed 52, field 50, type of commodity plant 60, period of time, or other such adjustment set criteria. For example, commodity plant 60 intervals or bounding size may be dynamic. If commodity plants 60 have been consistently classified and located at a regular interval of distance, if an expected commodity plant 60 is not identified along the plant line 62 at the expected interval, the existence of a commodity plant 60 at that location can optionally be inferred to avoid removing a commodity plant 60 that was not identified by the perception computer 270. Inversely, a potential false positive can be inferred and optionally reclassified for removal, for example, if a commodity plant 60 is classified and located at a location between the regular interval, additionally or alternatively, an outlier from a consistent range of bounding sizes may optionally be inferred to be a false positive.

If the distance between the location of two adjacent commodity plants 60 along a line 62 is too small and is thus insufficient to reliably cycle the tool attachments 400a-b thru deactivation and activation before traversing the second commodity plant, optionally the objects may be merged and the tool attachments 400a-b will remain activated for the full span of the two commodity plants 60, or non-max suppression may be used to remove the object with a lower confidence level, bounded size, or another such parameter. Additionally, or alternatively, commodity plants 60 located at other than the expected interval may be reclassified or otherwise treated as a weed for removal by tools 400a-b if thinning of the commodity plants 60 is desired and selected. Commodity plants 60 that are not located within a threshold range of a plant line 62 may also be reclassified or otherwise treated as a weed.

Also, if the inference time is not sufficient to classify and locate commodity plants in time for the spray head 410a to be activated by the time it transients the commodity plant, for example, if the implement 100 is being pulled at too high of a speed, the spray head 410a can be selected to remain activated or not activated continuously by the solenoid valve 420a along the the entire plant line 62, as desired.

Lastly, pre- and/or post-processing also addresses plant line 62 following and the left-right centering of the tool attachments 400a-b on each plant line. For example, in the illustrative embodiment a single vision module 500 is used for two adjacent lines 62. Depending on the field of view 58 of the lens 516, objects detected in lines 62 to the right and left of the two lines being worked by the that tool arm 300 may be masked in pre- or post-processing. Also, if a single line 62 is detected for one of the vision modules 500 rather than a pair of lines, rather than post-processing centering the left-right shifting of the tools arms 300 between the two lines, they are offset from the single line the appropriate distance for the line spacing set, for example, via the HMI. Also, left-right shifting may be based on a single selected vision module 500, or based on an averaging or other post-processing data analysis of the relative line locations detected for some or all of the vision modules 500.

For commodity plants 60 and optionally other objects that are classified and for which a location, bounding, and confidence level is desired, the image timestamp is matched to data from the odometer 232 for that timestamp, or, to save communication and computing bandwidth for the odometer, odometer data can be interpolated from the odometer data spanning the image timestamp. The odometer location of the plant can be determined from the timestamp, for example, by offsetting the odometer location based on the conversion from pixels that the plant is from the center of the field of view of the image. Finally, the odometer data increment at which the plant will be located at the location of blades 414 can then be determined by knowing the odometer distance between the center of the field of view of the image and thus camera 510 and the tool attachments 400a-b.

Alternatively, the location mapping of the commodity plants 60 can be done based on odometer and pixel conversions to real world measurement coordinate space, or to a different, even arbitrary measurement and location base for a coordinate space, as long as it correlates to the real world location of the camera 510, tool attachments 400a-b, and plants 60. Additionally, image flow of objects between consecutive images can be processed by perception computer 270 to determine speed and relative distances/locations over time, including when plants 60 will be located at tool attachment 400a-b without requiring the use of data from an odometer 236.

An illustrative state machine 600 for reliable operation of tool attachments 400a-b, including the above discussed features, is shown in Fig. 16.

Fig. 17 is an illustrative process 700 for training and operating implement 100 for a particular operation on a field of a particular type of commodity plant 60. Generally, the first three steps are completed by the implement builder, supplier, and/or service provider, and the remaining steps 704 through 708 are completed by an end user. In step 704 one or more sets of image data relevant to a particular type of commodity plant 60 are collected and objects in the image are tagged, for example objects are tagged as commodity plant, weeds, and/or other objects, including typical debris such as rocks and dead vegetation. Generally the image data will be most effective at training perception system 270 for an acceptably high rate of performance if the image data is collected using the vision module 500 and under all environmental and other conditions expected to be experienced in operation, including variations in soil, soil condition, maturity of or absence of commodity plants and weeds, and the like as is known in the art. In step 706 the perception system 270 is trained using the image data. This step may involve multiple sets of data, training and testing, varying the selected neural network model, varying parameters of the selected neural network model, and/or otherwise tuning the performance of the model as is known in the art of machine learning.

In step 708, the implement is calibrated. For example, various system and subsystem hydraulic pressures of hydraulic system 150 are set with manual regulators and/or the HMI touchscreen 204 as discussed above, any input sensors requiring calibration are calibrated, for example, setting the odometer encoder 232 based on the rear wheel 126 diameter. Additionally, the portion of the hydraulic system 150 operating the lift hydraulic cylinder 346 for the four-bar linkage portion of the tool arm 300 is calibrated to operate within a selected range of differential pressure and individual pressure limits to provide an operator selectability within that range. For example, so that the operator can easily adjust within the preselected range the weight of the tool arm 300 that is carried by the lift hydraulic cylinder 346 versus any weight on the ground applied by the ground follower 390 or the tool attachments 400a-b, depending on desired operation, performance, and characteristics, including but not limited to a desired level of dynamic following of varied soil profile levels, current field conditions, and soil compaction presence and/or avoidance. If the specific tool attachment 400a-b is mounted to tool arm 300, then the distance from the end effector of the tool, for example, spray head 410a or cultivator tools 410b to the center of the field of view of vision module 500 is also measured or otherwise verified and set in control system 200. Other additional calibration and or testing may also be completed at this step.

Still referring to Fig. 17, in step 710 an operator selects and mounts the tool attachment 400a-b for the desired operation and the particular commodity plant type. Advantageously, the same chassis 102 and the same tool arm 300 can be used for a wide range of commodity plant types and a wide range of operations. Training may need to be completed for control system 200 to handle some variations in plant types and operations, and different tool attachments 400a-b may also be utilized.

Once the tool attachments 400a-b are mounted to tool arms 300, in step 712 the operator can next provide any desired setting for control system 200 at HMI 204 for that specific operation, and also any additional calibration from step 708 which can now be completed with the mounted tool attachments 400a-b.

In step 714, a vehicle such as a tractor 40 is used to power and navigate the implement 100 to and within a field 50 to be worked. The implement 100 is lined up with the start of the commodity plant lines 62. In step 716, chassis 102 is lowered for operation, for example, using the three-point hitch on a tractor, and the implement is pulled along the plant lines. As discussed above, once control system 200 senses in step 716 that it has been lowered at the beginning of a plant line 62, for example using a weight-on-wheels sensor 218, inclinometer 234, or other sensor, the control system 200 switches from a transit mode to an operate mode, which includes the state machine 600 operation illustrated in Fig. 16.

Because the systems of implement 100 are designed to be automatic once calibrated and set up, for example, including detecting plant lines 62, side shifting tool arms 300 to follow the plant lines, and to complete the selected working operation, such as weeding, on the field 50, advantageously no added in-cab controls are required for monitoring or operating implement 100. The HMI 204 is generally located on the implement 100 and any in-cab controls on the tractor 40 are optional, for example via a wireless device, for example a tablet computer or other handheld or mounted touch screen device, including for optional in-cab observation, changing settings, or initiating or ceasing operation; however, all that is required from tractor 40 to operate implement 100 is navigating across field 50 and raising and lowering the chassis 102 at the beginning and end of the plant lines 62.

In step 718, the control system 200, including machine controller 202 and perception system 270, perform the processing and control discussed above providing autonomous working of the plant lines 62. For example, the processing and control includes, but not limited to, detecting plant lines 62; centering tool arms 300 on plant lines 62; classifying, assigning confidence, bounding, locating and tracking objects of interest, including the above discussed optional pre-/post-processing functions; following the working surface 58 using lift cylinder 346 of tool arm 300, and operating the tool attachment 400a-b to perform the working operation for the plant lines 62.

In step 720, upon reaching the end of the plant lines 62, the implement 100 is lifted up off the wheels by the tractor 40 pulling the implement. The control system 200 responds by switching from the operate mode to transit mode. In transit mode, control system 200 ceases various operations controlled by machine controller 202 and perception system 270, including detecting plant lines 62, following the working surface 58 with lift cylinder 346, and the operation of the tool attachment 400a-b. Additionally, any reset functions are completed, for example, recentering the tools arms 300 via side-shift actuator 176. If the field 50 is not yet completed, then the process continues at step 714 with aligning the implement 100 at the start of additional plant lines 62 and lowering the implement.

While the invention has been illustrated and described in detail in the foregoing drawings and description, the same is to be considered as illustrative and not restrictive in character, it being understood that only illustrative embodiments thereof have been shown and described and that all changes and modifications that come within the spirit and scope of the invention as defined in the claims and summary are desired to be protected. For example, in addition to the treatment materials disclosed above, in an alternative embodiment, treatment materials may include other substances that may be sprayed, for example, but not limited to, water or other fluids, and dry fertilizer, soil, or other granular or pellet treatment material.

## Claims

1. A smart sprayer (300, 400a) for use with a precision agriculture implement (100) to apply a treatment material (402) to selective application sites (60, 70), comprising:
a shroud (430);
a single spray head (410a) located within the shroud and positioned to direct the treatment material toward one of the selective application sites as it is traversed by the smart sprayer; and
an airflow generator (460) positioned to direct an airflow (406) around the single spray head and toward the one of the selective application sites.

2. The smart sprayer of claim 1, further comprising a mixer (470) located coaxially around the single spray head, the mixer for mixing the airflow and the treatment material.

3. The smart sprayer of claim 2, wherein the mixer is a Venturi type inspirator.

4. The smart sprayer of claim 3, wherein:
the single spray head includes a discharge tip (414); and
the discharge tip is located within a diverging cone (478) of the mixer and adjacent to a throat (472) of the mixer.

5. The smart sprayer of any one of the preceding claims, further comprising a first valve (420a) for selectively supplying the treatment material to the single spray head.

6. The smart sprayer of claim 5, wherein the first valve is located within the shroud and adjacent an inlet (418) of the single spray head.

7. The smart sprayer of claim 5 or claim 6, wherein the first valve is a solenoid valve.

8. The smart sprayer of any one of claims 5 to 7, further comprising a second valve (424) for regulating the pressure of the treatment material discharged by the single spray head.

9. The smart sprayer of any one of the preceding claims, further comprising a flowmeter (426) for measuring the treatment material discharged by at least the single spray head.

10. The smart sprayer of any one of the preceding claims, wherein the airflow generator comprises a fan located within the shroud.

11. The smart sprayer of any one of the preceding claims, wherein the airflow volume flowing over the single spray head provides atomization of the treatment material discharged by the single spray head and clears a discharge tip (414) of the single spray head of residue treatment material after a discharge cycle of treatment material is complete.

12. The smart sprayer of any one of the preceding claims, further comprising:
an airflow generator controller (462) for selectively setting an airflow volume produced by the airflow generator; and
wherein the airflow volume produced by the airflow generator is at least 300 cubic feet per minute.

13. The smart sprayer of any one of the preceding claims, wherein an airflow channel is formed between an outer surface (482) of the mixer and an inner surface (438) of the shroud; and an air curtain (408) is formed by a portion of the airflow flowing through the airflow channel and around a mixture (404) of the airflow and the treatment material exiting the mixer.

14. The smart sprayer of claim 1, wherein the shroud is cylindrical.

15. The smart sprayer according to any one of the preceding claims, wherein;
the spray head is a first spray head located within the shroud and positioned to direct a first treatment material toward one of the selective application sites as it is traversed by the smart sprayer, the airflow generator being positioned to direct an airflow around the first spray head and toward the one of the selective application sites; and the smart sprayer further comprising:
a mixer (470) located coaxially around the first spray head, the mixer for mixing the airflow and the treatment material.

16. The smart sprayer of claim 15, further comprising a second spray (410a) head located within the shroud and positioned to direct a second treatment material (402) toward the one of the selective application sites (60, 70) as it is traversed by the smart sprayer.

17. The smart sprayer of claim 15, further comprising a second spray head (410a) located within the shroud and positioned to direct the first treatment material (402) toward another one of the selective application sites (60, 70) as it is traversed by the smart sprayer.

18. The smart sprayer of claim 15, further comprising a second spray head (410a) located within the shroud and positioned to direct a second treatment material (402) toward the one of the selective application sites (60, 70) as it is traversed by the smart sprayer, and wherein a spray pattern of the first spray head is different than a spray pattern of the second spray head.

19. The smart sprayer of any one of claims 15 to 18, further comprising:
a modular tool arm (300) for coupling with the precision agriculture implement (100), the tool arm including:
a machine vision module (500) coupled to the modular tool arm and including at least one digital camera (510);
a control processor (202, 270);
an agricultural tool mount (370, 374); and
a height adjustment mechanism (346) for translating the first agricultural tool
mount along a vertical axis;
a plurality of modular agricultural tools selectively couplable with the first agricultural tool mount, the plurality of modular agricultural tools including the first sprayer (400a).

20. The smart sprayer of claim 19, wherein the control processor controls the height adjustment mechanism to position a bottom (434) of the shroud within a preselected distance from one of the commodity plants (60) and the commodity plant bed (52).

21. The smart sprayer of claim 19 or claim 20, wherein the control processor controls the height adjustment mechanism to position a discharge tip (414) of the spray head a preselected distance from the commodity plants (60) based at least in part on a spray angle of the spray head and the size of each of the commodity plants.

22. The smart sprayer of any one of claims 19 to 21, wherein:
the first sprayer further comprises a first valve (420a) for selectively supplying a treatment material (402) to the spray head;
the machine vision module and control processor identify and locate relative to the first sprayer at least one of the commodity plants (60) or a non-commodity plant (70) for treatment;
the processor selectively actuates the first valve to apply treatment material as the first sprayer transients at least one of: a commodity plant, a non-commodity plant, and an area around the commodity plants.

23. The smart sprayer of any one of claims 19 to 22, wherein the first sprayer further includes a flowmeter (426) and the control processor calculates and stores an amount of treatment material applied by the first sprayer to each of the at least one of the commodity plants or a non-commodity plant identified and located by the processor.

24. The smart sprayer of any one of claims 19 to 23, wherein:
the first sprayer further includes a second valve (424) for regulating the discharge rate of treatment material from the first sprayer;
the processor is configured to receive a treatment protocol for each of the at least one of the commodity plants or a non-commodity plant identified and located by the processor; and
the processor controls at least one of the first valve and the second valve to selectively discharge treatment material based on the treatment protocol received.

25. The smart sprayer of any one of claims 19 to 24, wherein:
the plurality of modular agricultural tools includes a second sprayer (400b);
the first sprayer (400a) and the second sprayer (400b) are coupled to the agricultural tool mount; and
the control processor positions the modular tool arm so that the first sprayer is aligned with a first plant line (62) detected by the machine vision module and the second sprayer is aligned with a second plant line (62) detected by the machine vision module.
